# EUROPEAN PATENT APPLICATION

(11) **EP 4 648 372 A1**
(43) Date of publication of application: **12.11.2025**
(21) Application number: 24749630.0
(22) Date of filing: 26.01.2024
(51) Int. Cl.: H04L 41/0273

(54) **NETWORK MANAGEMENT METHOD, APPARATUS AND SYSTEM, AND STORAGE MEDIUM**

(30) Priority: 31.01.2023 CN 202310093724
(71) Applicant: Huawei Technologies Co., Ltd., Shenzhen, Guangdong 518129 (CN)
(72) Inventor: LI, Yexing, Shenzhen, Guangdong 518129 (CN); LIU, Tingcai, Shenzhen, Guangdong 518129 (CN); YU, Yijun, Shenzhen, Guangdong 518129 (CN); RAO, Baoquan, Shenzhen, Guangdong 518129 (CN)
(74) Representative: Isarpatent
(86) International application number: PCT/CN2024/074247
(87) International publication number: WO 2024/160149

(57) **Abstract**

This application discloses a network management method, apparatus, and system, and a storage medium. A network management service consumer entity generates a first simulation network dataset based on a data generation model, where the data generation model is obtained through training based on a first network dataset, and the first network dataset includes network data collected from a physical network. In addition, the network management service consumer entity creates or updates a network twin based on the first simulation network dataset, where the network twin is a digital representation of the physical network for emulating the physical network. According to the solution of this application, the network twin is created or updated by using the simulation network dataset generated based on the data generation model, so that data does not need to be frequently obtained from a network management service provider entity. This reduces network data transmission of the physical network, thereby reducing consumption of transmission resources.

## Description

This application claims priority to Chinese Patent Application No. 202310093724.4, filed with the China National Intellectual Property Administration on January 31, 2023 and entitled "NETWORK MANAGEMENT METHOD, APPARATUS, AND SYSTEM, AND STORAGE MEDIUM", which is incorporated herein by reference in its entirety.

### TECHNICAL FIELD

This application relates to the field of communication technologies, and in particular, to a network management method, apparatus, and system, and a storage medium.

### BACKGROUND

Currently, in the communication industry, it is considered to apply a network twin technology to a communication network. An obtained network twin can simulate a physical network and reflect a running status of the physical network. Therefore, the network twin can be used for network performance prediction, fault detection, and the like. To improve consistency between the network twin and the physical network, a network management service consumer entity needs to update the network twin based on network data of the physical network. On this basis, a frequency of exchanging the network data of the physical network between the network management service consumer entity and a network management service provider entity is increased. For example, for statistical data, a collection frequency may be increased to once every 5 minutes, and for measurement data, a collection frequency may be increased to once every second. In this way, consistency between obtained or updated network twin and the physical network can be improved.

However, frequent data collection and full data reporting consume a large quantity of transmission resources. A higher collection frequency brings a larger amount of data, and consequently more transmission resources are consumed.

### SUMMARY

This application provides a network management method, apparatus, and system, and a storage medium, to reduce network data transmission, thereby reducing consumption of transmission resources.

According to a first aspect, a network management method is provided. The method includes: A network management service consumer entity generates a first simulation network dataset based on a data generation model, where the data generation model is obtained through training based on a first network dataset, and the first network dataset includes network data collected from a physical network. In addition, the network management service consumer entity creates or updates a network twin based on the first simulation network dataset, where the network twin is a digital representation of the physical network for emulating the physical network.

In this aspect, the network twin is created or updated by using the simulation network dataset generated based on the data generation model, so that data does not need to be frequently obtained from a network management service provider entity. This reduces network data transmission of the physical network, thereby reducing consumption of transmission resources.

In a possible implementation, the method further includes: The network management service consumer entity receives the first network dataset from the network management service provider entity.

In another possible implementation, the method further includes: The network management service consumer entity checks accuracy of the first simulation network dataset based on a second network dataset, and updates the data generation model, where the second network dataset includes network data collected from the physical network.

In this implementation, the network management service consumer entity may create or update the network twin within specific time based on the first simulation network dataset generated based on the data generation model. However, although there is a specific similarity between the first simulation network dataset and the first network dataset, the physical network keeps running, that is, keeps changing, and because the data generation model is obtained through the training based on the first network dataset and is not always updated, whether the first simulation network dataset is accurate needs to be checked within specific time. Otherwise, if accuracy of the first simulation network dataset is not checked within the specific time, an inaccurate first simulation network dataset is always used to update the network twin, and a network data difference between the network twin and the physical network is larger. Whether the first simulation network dataset is accurate may be checked based on the second network dataset reported by the network management provider entity.

In another possible implementation, that the network management service consumer entity checks accuracy of the first simulation network dataset based on a second network dataset includes: The network management service consumer entity determines, based on differential information between the first simulation network dataset and the second network dataset, whether the first simulation network dataset is accurate.

In another possible implementation, the updating the data generation model includes: The network management service consumer entity updates the data generation model by using a third network dataset, where the third network dataset includes network data collected from the physical network.

In this implementation, when a check result is inaccuracy, the data generation model is updated by using the third network dataset reported by the network management provider entity, to improve accuracy of the data generation model.

In another possible implementation, the method further includes: The network management service consumer entity indicates the network management service provider entity to send the network data of the physical network to the network management service consumer entity.

In another possible implementation, that the network management service consumer entity indicates the network management service provider entity to send the network data of the physical network to the network management service consumer entity includes: The network management service consumer entity sends a network data request to the network management service provider entity, where the network data request is used to request the network management service provider entity to generate and report the network data, and the network data request includes at least one of the following information: a generation periodicity and a storage policy. In addition, the network management service consumer entity receives the second network dataset of the network management service provider entity.

In this implementation, the network management service provider entity reports a small amount of network data, so that the network management service consumer entity can check the simulation network dataset based on the small amount of network data. In this way, the consumption of the transmission resources can be reduced when consistency between network data of the network twin created or updated based on the simulation network dataset and the network data of the physical network meets a requirement.

In another possible implementation, the generation periodicity indicates a first time interval between two times of generating the network data by the network management service provider entity. The storage policy indicates to store, as the third network dataset within a first specified time period, network data generated based on the generation periodicity.

In another possible implementation, the network data request further includes a first reporting policy, where the first reporting policy includes at least one of the following information: a first data obtaining periodicity and a first reporting periodicity. The first data obtaining periodicity indicates a second time interval between two times of obtaining the network data in the second network dataset by the network management service provider entity when the second network dataset is generated, where the first data obtaining periodicity is greater than or equal to the generation periodicity. The first reporting periodicity indicates a time interval between reporting two second network datasets.

In another possible implementation, when the network management service consumer entity checks that the first simulation network dataset is inaccurate, the method further includes: The network management service consumer entity sends a historical data reporting indication to the network management service provider entity, where the historical data reporting indication indicates the network management service provider entity to report the third network dataset. The network management service consumer entity receives first reporting information from the network management service provider entity, where the first reporting information includes the third network dataset. In addition, the network management service consumer entity optimizes the data generation model based on the third network dataset.

In this implementation, when the check result of the first simulation network dataset is the inaccuracy, the network management service provider entity is indicated to report historical data, and the data generation model is optimized based on the reported third network dataset, to improve the accuracy of the data generation model.

In another possible implementation, when the network management service consumer entity checks that the first simulation network dataset is inaccurate, the method further includes: The network management service consumer entity sends a model optimization request to the network management service provider entity, where the model optimization request includes the data generation model. The network management service consumer entity receives a model optimization response from the network management service provider entity, where the model optimization response includes an optimized data generation model, and the optimized data generation model is obtained by the network management service provider entity by optimizing the data generation model based on the third network dataset.

In another possible implementation, the method further includes: The network management service consumer entity sends a reporting policy switching indication to the network management service provider entity, where the reporting policy switching indication indicates to switch to a second reporting policy, the second reporting policy includes at least one of the following information: a second data obtaining periodicity and a second reporting periodicity, the second data obtaining periodicity is less than the first data obtaining periodicity, and the second reporting periodicity is less than the first reporting periodicity. The network management service provider entity sends second reporting information to the network management service consumer entity, where the second reporting information includes a fourth network dataset reported according to the second reporting policy, the fourth network dataset includes a part or all of the network data generated by the network management service provider entity based on the generation periodicity within a second time period, and a time interval between two times of obtaining the network data in the fourth network dataset is less than the first data obtaining periodicity. In addition, the network management service consumer entity updates the network twin based on the fourth network dataset.

In this implementation, when the check result of the first simulation network dataset is the inaccuracy, the network management service provider entity is indicated to switch the reporting policy, where the reporting policy switching indication indicates to reduce the data obtaining periodicity and the reporting periodicity of the network dataset of the physical network, and report the fourth network dataset. The network management service consumer entity updates the network twin based on the fourth network dataset, to improve consistency between the network twin and the physical network.

In another possible implementation, when the network management service consumer entity checks that the first simulation network dataset is accurate, the method further includes: The network management service consumer entity generates a second simulation network dataset based on the data generation model, and updates the network twin based on the second simulation network dataset.

In this implementation, when an error between the first simulation network dataset and the second network dataset is less than a first threshold, the network management service consumer entity may continue to generate the second simulation network dataset based on the data generation model, and update the network twin based on the second simulation network dataset. The network management service consumer entity continues to update the network twin based on the second simulation network dataset within specific time. This process is a loop (loop): After receiving a small amount of reported measurement data next time, the network management service consumer entity checks, based on the received small amount of measurement data, whether the second simulation network dataset is accurate.

According to a second aspect, a network management method is provided. The method includes: A network management service provider entity receives a historical data reporting indication and a reporting policy switching indication from a network management service consumer entity, where the historical data reporting indication indicates to report a historical network dataset of a physical network, the reporting policy switching indication indicates to reduce a data obtaining periodicity and a reporting periodicity of the network dataset of the physical network, the historical network dataset is used to optimize a data generation model, the data generation model is used to generate a simulation network dataset, the simulation network dataset is used to create or update a network twin, and the network twin is a digital representation of the physical network for emulating the physical network. In addition, the network management service provider entity sends the historical network dataset to the network management service consumer entity based on the historical data reporting indication, and sends a newly generated network dataset to the network management service consumer entity based on the reporting policy switching indication, where the newly generated network dataset is used to update the network twin during the optimization of the data generation model.

Reducing the data obtaining periodicity and the reporting periodicity of the network dataset of the physical network may alternatively be increasing a data obtaining frequency and a reporting frequency of the network dataset of the physical network.

In a possible implementation, the method further includes: The network management service provider entity sends a first network dataset to the network management service consumer entity, where the first network dataset is used to train the data generation model.

In another possible implementation, the method further includes: The network management service provider entity receives a network data request from the network management service consumer entity, where the network data request is used to request the network management service provider entity to generate and report network data, and the network data request includes a generation periodicity and a storage policy. The network management service provider entity sends a second network dataset to the network management service consumer entity, to enable the network management service consumer entity to check accuracy of the simulation network dataset based on the second network dataset, where the second network dataset includes network data collected from the physical network. In addition, the network management service provider entity stores, according to the storage policy, the historical network dataset generated by the network management service provider entity based on the generation periodicity within a first specified time period.

In still another possible implementation, the generation periodicity indicates a first time interval between two times of generating the network data by the network management service provider entity. The storage policy indicates to store the historical network dataset generated based on the generation periodicity within the first specified time period.

In still another possible implementation, the network data request further includes a reporting policy, where the reporting policy includes at least one of the following information: the data obtaining periodicity and the reporting periodicity. The data obtaining periodicity indicates a second time interval between two times of obtaining the network data in the second network dataset by the network management service provider entity when the second network dataset is generated, where the data obtaining periodicity is greater than or equal to the generation periodicity. The reporting periodicity indicates a time interval between reporting two second network datasets.

In still another possible implementation, the method further includes: The network management service provider entity receives a model optimization request from the network management service consumer entity, where the model optimization request includes the data generation model. The network management service provider entity optimizes the data generation model based on the model optimization request and a third network dataset, to obtain an optimized data generation model. In addition, the network management service provider entity sends a model optimization response to the network management service consumer entity, where the model optimization response includes the optimized data generation model, and the optimized data generation model is obtained by the network management service provider entity by optimizing the data generation model based on the third network dataset.

According to a third aspect, a network management method is provided. The method includes: A network management service provider entity sends a first network dataset to a network management service consumer entity. The network management service consumer entity generates a first simulation network dataset based on a data generation model, where the data generation model is obtained through training based on the first network dataset, and the first network dataset includes network data collected from a physical network. In addition, the network management service consumer entity creates or updates a network twin based on the first simulation network dataset, where the network twin is a digital representation of the physical network for emulating the physical network.

In a possible implementation, the method further includes: The network management service consumer entity indicates the network management service provider entity to send the network data of the physical network to the network management service consumer entity. In addition, the network management service provider entity sends the network data of the physical network to the network management service consumer entity.

In another possible implementation, the method further includes: The network management service consumer entity checks accuracy of the first simulation network dataset based on a second network dataset, and updates the data generation model, where the second network dataset includes network data collected from the physical network.

In still another possible implementation, that the network management service consumer entity checks accuracy of the first simulation network dataset based on a second network dataset includes: The network management service consumer entity determines, based on differential information between the first simulation network dataset and the second network dataset, whether the first simulation network dataset is accurate.

In still another possible implementation, the updating the data generation model includes: The network management service consumer entity updates the data generation model by using a third network dataset, where the third network dataset includes network data collected from the physical network.

In still another possible implementation, that the network management service consumer entity indicates the network management service provider entity to send the network data of the physical network to the network management service consumer entity includes: The network management service consumer entity sends a network data request to the network management service provider entity, where the network data request is used to request the network management service provider entity to generate and report the network data, and the network data request includes at least one of the following information: a generation periodicity and a storage policy. The network management service provider entity sends the second network dataset to the network management service consumer entity. In addition, the network management service provider entity stores, as the third network dataset according to the storage policy, network data generated by the network management service provider entity based on the generation periodicity within a first specified time period.

In still another possible implementation, the generation periodicity indicates a first time interval between two times of generating the network data by the network management service provider entity. The storage policy indicates to store, as the third network dataset within the first specified time period, the network data generated based on the generation periodicity.

In still another possible implementation, the network data request further includes a first reporting policy, where the first reporting policy includes at least one of the following information: a first data obtaining periodicity and a first reporting periodicity. The first data obtaining periodicity indicates a second time interval between two times of obtaining the network data in the second network dataset by the network management service provider entity when the second network dataset is generated, where the first data obtaining periodicity is greater than or equal to the generation periodicity. The first reporting periodicity indicates a time interval between reporting two second network datasets.

In still another possible implementation, when the network management service consumer entity checks that the first simulation network dataset is inaccurate, the method further includes: The network management service consumer entity sends a historical data reporting indication to the network management service provider entity, where the historical data reporting indication indicates the network management service provider entity to report the third network dataset. The network management service provider entity sends first reporting information to the network management service consumer entity, where the first reporting information includes the third network dataset. In addition, the network management service consumer entity optimizes the data generation model based on the third network dataset.

In still another possible implementation, the method further includes: The network management service consumer entity sends a reporting policy switching indication to the network management service provider entity, where the reporting policy switching indication indicates to switch to a second reporting policy, the second reporting policy includes at least one of the following information: a second data obtaining periodicity and a second reporting periodicity, the second data obtaining periodicity is less than the first data obtaining periodicity, and the second reporting periodicity is less than the first reporting periodicity. The network management service provider entity sends second reporting information to the network management service consumer entity, where the second reporting information includes a fourth network dataset reported according to the second reporting policy, the fourth network dataset includes a part or all of the network data generated by the network management service provider entity based on the generation periodicity within a second time period, and a time interval between two times of obtaining the network data in the fourth network dataset is less than the first data obtaining periodicity. In addition, the network management service consumer entity updates the network twin based on the fourth network dataset.

According to a fourth aspect, a network management apparatus is provided, and can implement the network management method in the first aspect. For example, the network management apparatus may be a chip or a network management service consumer entity. The foregoing method may be implemented by software, hardware, or hardware executing corresponding software.

In a possible implementation, the apparatus includes a processing unit. The processing unit is configured to generate a first simulation network dataset based on a data generation model, where the data generation model is obtained through training based on a first network dataset, and the first network dataset includes network data collected from a physical network. In addition, the processing unit is further configured to create or update a network twin based on the first simulation network dataset, where the network twin is a digital representation of the physical network for emulating the physical network.

Optionally, the apparatus further includes a transceiver unit. The transceiver unit is configured to receive the first network dataset from a network management service provider entity.

Optionally, the processing unit is further configured to: check accuracy of the first simulation network dataset based on a second network dataset, and update the data generation model, where the second network dataset includes network data collected from the physical network.

Optionally, the processing unit is further configured to determine, based on differential information between the first simulation network dataset and the second network dataset, whether the first simulation network dataset is accurate.

Optionally, the processing unit is further configured to update the data generation model by using a third network dataset, where the third network dataset includes network data collected from the physical network.

Optionally, the transceiver unit is further configured to indicate the network management service provider entity to send the network data of the physical network to the network management service consumer entity.

Optionally, the transceiver unit is further configured to send a network data request to the network management service provider entity, where the network data request is used to request the network management service provider entity to generate and report the network data, and the network data request includes at least one of the following information: a generation periodicity and a storage policy. In addition, the transceiver unit is further configured to receive the second network dataset from the network management service provider entity.

Optionally, the generation periodicity indicates a first time interval between two times of generating the network data by the network management service provider entity. The storage policy indicates to store, as the third network dataset within a first specified time period, network data generated based on the generation periodicity.

Optionally, the network data request further includes a first reporting policy, where the first reporting policy includes at least one of the following information: a first data obtaining periodicity and a first reporting periodicity. The first data obtaining periodicity indicates a second time interval between two times of obtaining the network data in the second network dataset by the network management service provider entity when the second network dataset is generated, where the first data obtaining periodicity is greater than or equal to the generation periodicity. The first reporting periodicity indicates a time interval between reporting two second network datasets.

Optionally, the transceiver unit is further configured to send a historical data reporting indication to the network management service provider entity, where the historical data reporting indication indicates the network management service provider entity to report the third network dataset. The transceiver unit is further configured to receive first reporting information from the network management service provider entity, where the first reporting information includes the third network dataset. In addition, the processing unit is further configured to optimize the data generation model based on the third network dataset.

Optionally, the transceiver unit is further configured to send a model optimization request to the network management service provider entity, where the model optimization request includes the data generation model. The transceiver unit is further configured to receive a model optimization response from the network management service provider entity, where the model optimization response includes an optimized data generation model, and the optimized data generation model is obtained by the network management service provider entity by optimizing the data generation model based on the third network dataset.

Optionally, the transceiver unit is further configured to send a reporting policy switching indication to the network management service provider entity, where the reporting policy switching indication indicates to switch to a second reporting policy, the second reporting policy includes at least one of the following information: a second data obtaining periodicity and a second reporting periodicity, the second data obtaining periodicity is less than the first data obtaining periodicity, and the second reporting periodicity is less than the first reporting periodicity. The transceiver unit is further configured to receive second reporting information from the network management service provider entity, where the second reporting information includes a fourth network dataset reported according to the second reporting policy, the fourth network dataset includes a part or all of the network data generated by the network management service provider entity based on the generation periodicity within a second time period, and a time interval between two times of obtaining the network data in the fourth network dataset is less than the first data obtaining periodicity. In addition, the processing unit is further configured to update the network twin based on the fourth network dataset.

Optionally, the processing unit is further configured to: when validating that the first simulation network dataset is accurate, generate a second simulation network dataset based on the data generation model, and update the network twin based on the second simulation network dataset.

According to a fifth aspect, a network management apparatus is provided, and can implement the network management method in the second aspect. For example, the network management apparatus may be a chip or a network management service consumer entity. The foregoing method may be implemented by software, hardware, or hardware executing corresponding software.

In a possible implementation, the apparatus includes a transceiver unit. The transceiver unit is configured to receive a historical data reporting indication and a reporting policy switching indication from a network management service consumer entity, where the historical data reporting indication indicates to report a historical network dataset of a physical network, the reporting policy switching indication indicates to reduce a data obtaining periodicity and a reporting periodicity of the network dataset of the physical network, the historical network dataset is used to optimize a data generation model, the data generation model is used to generate a simulation network dataset, the simulation network dataset is used to create or update a network twin, and the network twin is a digital representation of the physical network for emulating the physical network. In addition, the transceiver unit is further configured to: send the historical network dataset to the network management service consumer entity based on the historical data reporting indication, and send a newly generated network dataset to the network management service consumer entity based on the reporting policy switching indication, where the newly generated network dataset is used to update the network twin during the optimization of the data generation model.

Reducing the data obtaining periodicity and the reporting periodicity of the network dataset of the physical network may alternatively be increasing a data obtaining frequency and a reporting frequency of the network dataset of the physical network.

Optionally, the transceiver unit is further configured to send a first network dataset to the network management service consumer entity, where the first network dataset is used to train the data generation model.

Optionally, the apparatus further includes a processing unit. The transceiver unit is further configured to receive a network data request from the network management service consumer entity, where the network data request is used to request the network management service provider entity to generate and report network data, and the network data request includes a generation periodicity and a storage policy. The transceiver unit is further configured to send a second network dataset to the network management service consumer entity, to enable the network management service consumer entity to check accuracy of the simulation network dataset based on the second network dataset, where the second network dataset includes network data collected from the physical network. In addition, the processing unit is configured to store, according to the storage policy, the historical network dataset generated by the network management service provider entity based on the generation periodicity within a first specified time period.

Optionally, the generation periodicity indicates a first time interval between two times of generating the network data by the network management service provider entity. The storage policy indicates to store the historical network dataset generated based on the generation periodicity within the first specified time period.

Optionally, the network data request further includes a reporting policy, where the reporting policy includes at least one of the following information: the data obtaining periodicity and the reporting periodicity. The data obtaining periodicity indicates a second time interval between two times of obtaining the network data in the second network dataset by the network management service provider entity when the second network dataset is generated, where the data obtaining periodicity is greater than or equal to the generation periodicity. The reporting periodicity indicates a time interval between reporting two second network datasets.

Optionally, the transceiver unit is further configured to receive a model optimization request from the network management service consumer entity, where the model optimization request includes the data generation model. The processing unit is further configured to optimize the data generation model based on the model optimization request and a third network dataset, to obtain an optimized data generation model. In addition, the transceiver unit is further configured to send a model optimization response to the network management service consumer entity, where the model optimization response includes the optimized data generation model, and the optimized data generation model is obtained by the network management service provider entity by optimizing the data generation model based on the third network dataset.

With reference to the fourth aspect, the fifth aspect, or either of the fourth aspect and the fifth aspect, in another possible implementation, the network management apparatus in the fourth aspect, the fifth aspect, or either of the fourth aspect and the fifth aspect includes a processor coupled to a memory. The processor is configured to support the apparatus in performing a corresponding function in the foregoing network management method. The memory is configured to be coupled to the processor, and stores a program (instructions) and/or data necessary for the apparatus. Optionally, the network management apparatus may further include a communication interface, configured to support the apparatus in communicating with another network element. Optionally, the memory may be located inside the network management apparatus, or may be located outside the network management apparatus.

With reference to the fourth aspect, the fifth aspect, or either of the fourth aspect and the fifth aspect, in another possible implementation, the network management apparatus in the fourth aspect, the fifth aspect, or either of the fourth aspect and the fifth aspect includes a processor and a transceiver apparatus. The processor is coupled to the transceiver apparatus. The processor is configured to execute a computer program or instructions, to control the transceiver apparatus to receive and send information. When the processor executes the computer program or the instructions, the processor is further configured to implement the foregoing method by using a logic circuit or by executing code instructions. The transceiver apparatus may be a transceiver, a transceiver circuit, or an input/output interface, and is configured to: receive a signal from an apparatus other than the network management apparatus and transmit the signal to the processor, or send a signal from the processor to an apparatus other than the network management apparatus. When the network management apparatus is a chip, the transceiver apparatus is the transceiver circuit or the input/output interface.

When the network management apparatus in the fourth aspect, the fifth aspect, or either of the fourth aspect and the fifth aspect is a chip or a chip module, a sending unit may be an output unit, for example, an output circuit or a communication interface; and a receiving unit may be an input unit, for example, an input circuit or a communication interface. When the network management apparatus is a terminal or an access network device, a sending unit may be a transmitter or a transmitter machine, and a receiving unit may be a receiver or a receiver machine.

According to a sixth aspect, a network management system is provided. The system includes a network management service consumer entity and a network management service provider entity. The network management service provider entity is configured to send a first network dataset to the network management service consumer entity. The network management service consumer entity is configured to generate a first simulation network dataset based on a data generation model, where the data generation model is obtained through training based on the first network dataset, and the first network dataset includes network data collected from a physical network. In addition, the network management service consumer entity is further configured to create or update a network twin based on the first simulation network dataset, where the network twin is a digital representation of the physical network for emulating the physical network.

Optionally, the network management service consumer entity is further configured to indicate the network management service provider entity to send the network data of the physical network to the network management service consumer entity. In addition, the network management service provider entity is further configured to send the network data of the physical network to the network management service consumer entity.

Optionally, the network management service consumer entity is further configured to: check accuracy of the first simulation network dataset based on a second network dataset, and update the data generation model, where the second network dataset includes network data collected from the physical network.

Optionally, the network management service consumer entity is further configured to determine, based on differential information between the first simulation network dataset and the second network dataset, whether the first simulation network dataset is accurate.

Optionally, the network management service consumer entity is further configured to update the data generation model by using a third network dataset, where the third network dataset includes network data collected from the physical network.

Optionally, the network management service consumer entity is further configured to send a network data request to the network management service provider entity, where the network data request is used to request the network management service provider entity to generate and report the network data, and the network data request includes at least one of the following information: a generation periodicity and a storage policy. The network management service provider entity is further configured to send the second network dataset to the network management service consumer entity. In addition, the network management service provider entity is further configured to store, as the third network dataset according to the storage policy, network data generated by the network management service provider entity based on the generation periodicity within a first specified time period.

Optionally, the generation periodicity indicates a first time interval between two times of generating the network data by the network management service provider entity. The storage policy indicates to store, as the third network dataset within the first specified time period, the network data generated based on the generation periodicity.

Optionally, the network data request further includes a first reporting policy, where the first reporting policy includes at least one of the following information: a first data obtaining periodicity and a first reporting periodicity. The first data obtaining periodicity indicates a second time interval between two times of obtaining the network data in the second network dataset by the network management service provider entity when the second network dataset is generated, where the first data obtaining periodicity is greater than or equal to the generation periodicity. The first reporting periodicity indicates a time interval between reporting two second network datasets.

Optionally, when the network management service consumer entity checks that the first simulation network dataset is inaccurate, the network management service consumer entity is further configured to send a historical data reporting indication to the network management service provider entity, where the historical data reporting indication indicates the network management service provider entity to report the third network dataset. The network management service provider entity is further configured to send first reporting information to the network management service consumer entity, where the first reporting information includes the third network dataset. In addition, the network management service consumer entity is further configured to optimize the data generation model based on the third network dataset.

Optionally, the network management service consumer entity is further configured to send a reporting policy switching indication to the network management service provider entity, where the reporting policy switching indication indicates to switch to a second reporting policy, the second reporting policy includes at least one of the following information: a second data obtaining periodicity and a second reporting periodicity, the second data obtaining periodicity is less than the first data obtaining periodicity, and the second reporting periodicity is less than the first reporting periodicity. The network management service provider entity is further configured to send second reporting information to the network management service consumer entity, where the second reporting information includes a fourth network dataset reported according to the second reporting policy, the fourth network dataset includes a part or all of the network data generated by the network management service provider entity based on the generation periodicity within a second time period, and a time interval between two times of obtaining the network data in the fourth network dataset is less than the first data obtaining periodicity. In addition, the network management service consumer entity is further configured to update the network twin based on the fourth network dataset.

According to a seventh aspect, a computer-readable storage medium is provided. The computer-readable storage medium stores a computer program or instructions, and when a computer executes the computer program or the instructions, the methods in the foregoing aspects are implemented.

According to an eighth aspect, a computer program product including instructions is provided. When the instructions are run on a network management apparatus, the network management apparatus is enabled to perform the methods in the foregoing aspects.

### BRIEF DESCRIPTION OF DRAWINGS

FIG. 1 is a schematic flowchart of data exchange according to an embodiment of this application;
FIG. 2 is a diagram of a structure of a network management system according to an embodiment of this application;
FIG. 3 is a diagram of a structure of an example of a network management system across network domains according to an embodiment of this application;
FIG. 4 is a diagram of a structure of an example of a network management system in a single network domain according to an embodiment of this application;
FIG. 5 is a schematic flowchart of a network management method according to an embodiment of this application;
FIG. 6A and FIG. 6B are a schematic flowchart of another network management method according to an embodiment of this application;
FIG. 7A and FIG. 7B are a schematic flowchart of still another network management method according to an embodiment of this application;
FIG. 8 is a diagram of a structure of a network management apparatus according to an embodiment of this application; and
FIG. 9 is a diagram of a structure of another network management apparatus according to an embodiment of this application.

### DESCRIPTION OF EMBODIMENTS

The following describes embodiments of this application with reference to accompanying drawings in embodiments of this application.

Currently, the concept of network twin is proposed. The network twin means to establish a digital mirror of a physical network (physical network) in a digitalized manner, and digitalize the physical network by using historical network data, real-time network data, and an algorithm model of the physical network, to implement synchronous analysis and prediction on, improve, and optimize the physical network. The network twin is also referred to as a network digital twin or a network digital twin entity. This is not limited in this application. The physical network is a network formed by connecting various types of physical devices or network elements (for example, hosts, routers, and switches) and media (optical cables, cables, twisted pairs, and the like) in a network. The physical network may be a mobile access network, a transport network, a mobile core network, a backbone network, or the like. The physical network may alternatively be a data center network, a campus network, an industrial internet of things, or the like. The network data, also referred to as network running data, indicates a running status of the physical network. The network data may be a configuration parameter, alarm data, performance data, or the like of the physical device or the network element.

To better simulate and test a plurality of scenarios of the physical network, a network management service consumer entity needs to update the network twin based on the running status of the physical network. More frequent interaction between the network management service consumer entity and a network management service provider entity indicates timelier collected data and more accurate simulation and prediction effects. Therefore, a strict requirement is imposed on accuracy, timeliness, and interactivity of a network data collection and feedback process of the physical network.

With reduction of costs of data storage, computing, and transmission and continuous improvement of data processing capabilities, the network twin gradually enters people's vision and is applied in many fields.

Currently, in the communication industry, it is considered to apply a network twin technology to a communication network, and use the network twin to simulate the network data of the physical network, to perform network performance prediction, fault detection, and the like. In addition, a large amount of research and standardization work have been carried out on application of the network twin in the network.

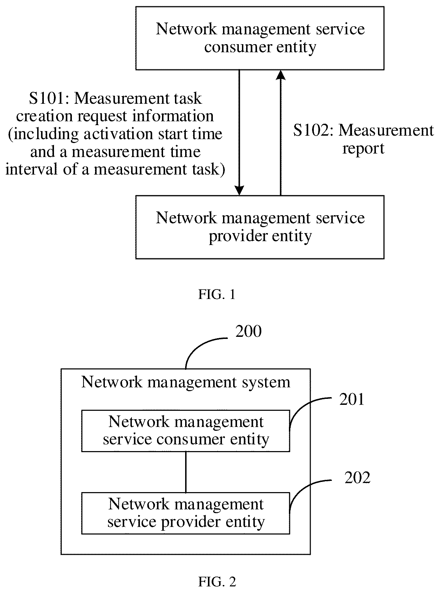

FIG. 1 is a schematic flowchart of data exchange according to an embodiment of this application. The procedure relates to a network management service provider entity and a network management service consumer entity. In embodiments of this application, the network management service provider entity may also be referred to as a network management service provider (network service producer), and may be deployed in a network element, and the corresponding network element is referred to as a network management service provider entity; or the network management service provider entity may be deployed in another device. The network management service consumer entity may also be referred to as a network management service consumer (network service consumer), and may be deployed in a network element, and the corresponding network element is referred to as a network management service consumer entity; or the network management service consumer entity may be deployed in another device.

In step S101, the network management service consumer entity may send measurement task creation request information to the network management service provider entity.

In step S102, the network management service provider entity sends a measurement report to the network management service consumer entity.

To always maintain consistency with a physical network, an exchange frequency may be increased, that is, a frequency of exchanging network data of the physical network between the network management service consumer entity and the network management service provider entity. For example, for statistical data, a maximum collection frequency may be once every 5 minutes, and for measurement data, a maximum collection frequency may be once every second. A network twin is accurately constructed and updated through frequent data collection and exchange.

However, the construction and update of the network twin need the network management service provider entity to report a large amount of network data, for example, network element configuration data (for example, an internet protocol (internet protocol, IP) of a base station or frequency information of the base station), user data (for example, subscription information of a user or quantity information of the user), environment data (for example, building information, temperature information, or humidity information), service data (whether a data packet of a service flow is a large packet or a small packet, or quality of service information of the service flow), and the like. The frequent data collection and full data reporting consume a large quantity of transmission resources (for example, bandwidth between a network management system (network management system, NMS) and an element management system (element management system, EMS)). A higher collection frequency indicates a larger amount of data and more consumed transmission resources.

Embodiments of this application provide a network management solution. A network management service consumer entity generates a first simulation network dataset based on a data generation model, where the data generation model is obtained through training based on a first network dataset, and the first network dataset includes collected network data of a physical network. In addition, the network management service consumer entity creates or updates a network twin based on the first simulation network dataset, where the network twin is a digital mirror of the physical network, and the network twin is used to simulate the network data of the physical network. The network twin is created or updated by using the simulation network dataset generated based on the data generation model, so that data does not need to be frequently obtained from a network management service provider entity. This reduces network data transmission of the physical network, thereby reducing consumption of transmission resources.

The following describes implementations of this application by using specific embodiments. Persons skilled in the art may understand other advantages and effects of this application based on content disclosed in this specification. Although descriptions of this application are provided with reference to preferred embodiments, this does not mean that features of this application are limited to this implementation. On the contrary, a purpose of describing this application with reference to the implementations is to cover another option or modification that may be derived based on the claims of this application. To improve in-depth understanding of this application, the following descriptions include many specific details. This application may alternatively be implemented without using these details. In addition, to avoid confusion or blurring a focus of this application, some specific details are omitted from the descriptions. It should be noted that embodiments in this application and the features in embodiments may be mutually combined in the case of no conflict.

The following terms "first", "second", and the like are merely used for description, and shall not be understood as an indication or implication of relative importance or implicit indication of a quantity of indicated technical features. Therefore, a feature limited by "first", "second", or the like may explicitly or implicitly include one or more features. In the descriptions of this application, unless otherwise specified, "a plurality of" means two or more than two.

FIG. 2 is a diagram of a structure of a network management system according to an embodiment of this application. The network management system 200 includes a network management service consumer entity 201 and a network management service provider entity 202.

The network management service consumer entity 201 is an invoker of a management service. In embodiments of this application, the network management service consumer entity 201 is a data collection service consumer, and is responsible for delivering a measurement task and obtaining a measurement report. The network management service consumer entity 201 receives the measurement report reported by the network management service provider entity 202.

The network management service provider entity 202 is a provider of the management service. In embodiments of this application, the network management service provider entity 202 is a collection service producer, and is responsible for establishing the measurement task, generating measurement data, and sending the measurement report to the network management service consumer entity 201. The measurement report includes the measurement data.

The network management service consumer entity 201 is configured to generate a first simulation network dataset based on a data generation model, where the data generation model is obtained through training based on a first network dataset, and the first network dataset includes network data collected from a physical network. The network management service consumer entity 201 is further configured to create or update a network twin based on the first simulation network dataset, where the network twin is a digital representation of the physical network for emulating the physical network.

In a probability statistics theory, the data generation model is a model that can randomly generate observed data, especially when some hidden parameters are given. The data generation model specifies a joint probability distribution for an observed value and a labeled data sequence. In machine learning, the data generation model may be directly used for data modeling (for example, performing data sampling based on a probability density function of a variable), or may be used to establish a conditional probability distribution between variables. The conditional probability distribution may be formed by using the data generation model based on the Bayes' theorem. Common data generation models include naive Bayes, a Gaussian mixture model, a hidden Markov model (hidden Markov model, HMM), a generative adversarial network (generative adversarial network, GAN), and the like.

Optionally, the network management service consumer entity 201 is further configured to indicate the network management service provider entity 202 to send the network data of the physical network to the network management service consumer entity 201. In addition, the network management service provider entity 202 is configured to send the network data of the physical network to the network management service consumer entity 201.

Optionally, the network management service consumer entity 201 is further configured to: check accuracy of the first simulation network dataset based on a second network dataset, and update the data generation model, where the second network dataset includes network data collected from the physical network.

Optionally, the network management service consumer entity 201 is further configured to determine, based on differential information between the first simulation network dataset and the second network dataset, whether the first simulation network dataset is accurate.

Optionally, the network management service consumer entity 201 is further configured to update the data generation model by using a third network dataset, where the third network dataset includes network data collected from the physical network.

Optionally, the network management service consumer entity 201 is further configured to send a network data request to the network management service provider entity 202, where the network data request is used to request the network management service provider entity 202 to generate and report the network data, and the network data request includes at least one of the following information: a generation periodicity and a storage policy. The network management service provider entity 202 is further configured to send the second network dataset to the network management service consumer entity 201. In addition, the network management service provider entity 202 is further configured to store, as the third network dataset according to the storage policy, network data generated by the network management service provider entity 202 based on the generation periodicity within a first specified time period.

For example, the network data request includes an identifier of a network element or subnet on which collection needs to be performed, and may further include a to-be-collected parameter like a key performance indicator (key performance indicator, KPI). The network management service provider entity 202 determines, based on the identifier of the network element or the subnet, a range of entities from which network data is to be collected, and determines, based on the key performance indicator, a range of performance data to be collected.

Optionally, the generation periodicity indicates a first time interval between two times of generating the network data by the network management service provider entity 202. The storage policy indicates to store, as the third network dataset within the first specified time period, the network data generated based on the generation periodicity.

Optionally, the network data request further includes a first reporting policy, where the first reporting policy includes at least one of the following information: a first data obtaining periodicity and a first reporting periodicity. The first data obtaining periodicity indicates a second time interval between two times of obtaining the network data in the second network dataset by the network management service provider entity 202 when the second network dataset is generated, where the first data obtaining periodicity is greater than or equal to the generation periodicity. The first reporting periodicity indicates a time interval between reporting two second network datasets.

Optionally, the network management service consumer entity 201 is further configured to: when validating that the first simulation network dataset is inaccurate, send a historical data reporting indication to the network management service provider entity 202, where the historical data reporting indication indicates the network management service provider entity 202 to report the third network dataset. The network management service provider entity 202 is further configured to send first reporting information to the network management service consumer entity 201, where the first reporting information includes the third network dataset. In addition, the network management service consumer entity 201 is further configured to optimize the data generation model based on the third network dataset.

Optionally, the network management service consumer entity 201 is further configured to send a reporting policy switching indication to the network management service provider entity 202, where the reporting policy switching indication indicates to switch to a second reporting policy, the second reporting policy includes at least one of the following information: a second data obtaining periodicity and a second reporting periodicity, the second data obtaining periodicity is less than the first data obtaining periodicity, and the second reporting periodicity is less than the first reporting periodicity. The network management service provider entity 202 is further configured to send second reporting information to the network management service consumer entity 201, where the second reporting information includes a fourth network dataset reported according to the second reporting policy, the fourth network dataset includes a part or all of the network data generated by the network management service provider entity 202 based on the generation periodicity within a second time period, and a time interval between two times of obtaining the network data in the fourth network dataset is less than the first data obtaining periodicity. In addition, the network management service consumer entity 201 is further configured to update the network twin based on the fourth network dataset.

The network management service provider entity 202 receives the historical data reporting indication and the reporting policy switching indication from the network management service consumer entity 201, where the historical data reporting indication indicates to report a historical network dataset of the physical network, the reporting policy switching indication indicates to reduce a data obtaining periodicity and a reporting periodicity of the network dataset of the physical network, the historical network dataset is used to optimize the data generation model, the data generation model is used to generate the simulation network dataset, the simulation network dataset is used to create or update the network twin, and the network twin is the digital representation of the physical network for emulating the physical network. In addition, the network management service provider entity 202 sends the historical network dataset to the network management service consumer entity 201 based on the historical data reporting indication, and sends a newly generated network dataset to the network management service consumer entity 201 based on the reporting policy switching indication, where the newly generated network dataset is used to update the network twin during the optimization of the data generation model.

Reducing the data obtaining periodicity and the reporting periodicity of the network dataset of the physical network may alternatively be increasing a data obtaining frequency and a reporting frequency of the network dataset of the physical network.

Optionally, the network management service provider entity 202 sends the first network dataset to the network management service consumer entity 201, where the first network dataset is used to train the data generation model.

Optionally, the network management service provider entity 202 receives the network data request from the network management service consumer entity 201, where the network data request is used to request the network management service provider entity 202 to generate and report the network data, and the network data request includes the generation periodicity and the storage policy. The network management service provider entity 202 sends the second network dataset to the network management service consumer entity 201, to enable the network management service consumer entity 201 to check the accuracy of the simulation network dataset based on the second network dataset, where the second network dataset includes the network data collected from the physical network. In addition, the network management service provider entity 202 stores, according to the storage policy, the historical network dataset generated by the network management service provider entity 202 based on the generation periodicity within the first specified time period.

Optionally, the network management service provider entity 202 receives a model optimization request from the network management service consumer entity 201, where the model optimization request includes the data generation model. The network management service provider entity 202 optimizes the data generation model based on the model optimization request and the third network dataset, to obtain an optimized data generation model. In addition, the network management service provider entity 202 sends a model optimization response to the network management service consumer entity 201, where the model optimization response includes the optimized data generation model, and the optimized data generation model is obtained by the network management service provider entity 202 by optimizing the data generation model based on the third network dataset.

For example, the foregoing network management system may be a network management system across network domains (network domains) (referred to as a "domain" for short) or in a single network domain.

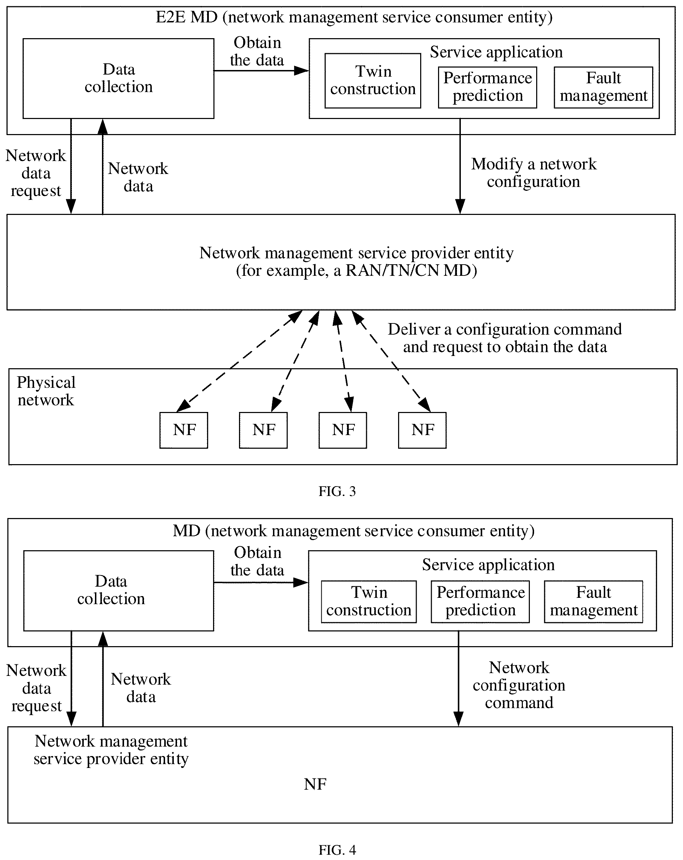

FIG. 3 is a diagram of a structure of a network management system across network domains to which an embodiment of this application is applicable. The network management system includes an end-to-end (end-to-end, E2E) management domain (management domain, MD), a radio access network (radio access network, RAN) MD/transport network (transport network, TN) MD/core network (core network, CN) MD, and one or more network functions (network functions, NFs) in the RAN/TN/CN MD.

The E2E MD may correspond to the NMS or an operations support system (operations support system, OSS). The RAN/TN/CN MD may correspond to an EMS. The NF may correspond to an access network device, a transport network device, or a core network device, for example, a base station, a switch, a router, or a core network element (for example, a session management function (session management function, SMF), an access and mobility management function (access and mobility management function, AMF), or a network data analytics function (network data analytics function, NWDAF)).

A network management service consumer entity is a management service consumer logical entity or physical entity deployed in the NMS, and is an invoker of a management service. In embodiments of this application, the network management service consumer entity is a data collection service consumer, and is responsible for delivering a measurement task and obtaining a measurement report. The network management service consumer entity receives the measurement report reported by a network management service provider entity in the RAN/TN/CN MD, that is, the network management service consumer entity collects measurement data across network objects.

The network management service provider entity is a management service provider logical entity or physical entity deployed in the EMS, and is a provider of the management service. In embodiments of this application, the network management service provider entity is a collection service producer, and is responsible for establishing the measurement task, generating the measurement data, and sending the measurement report to the network management service consumer entity. The measurement report includes the measurement data.

One or more service applications may be further deployed in the NMS. The service application is an application subject of the measurement data, and processes and analyzes the measurement data, to monitor a network status, or generate or modify a network configuration command. For example, the service application may be network twin construction, performance prediction, fault prediction, or the like. The network configuration command may be adjusting an antenna tilt angle of a base station, turning on an algorithm switch of the base station, or the like.

FIG. 4 is a diagram of a structure of a network management system in a single network domain to which an embodiment of this application is applicable. The network management system includes an MD and one or more NFs (one NF is shown as an example in the figure). The MD may correspond to an EMS. The NF may correspond to an access network device, a transport network device, or a core network device, for example, a base station, a switch, a router, or a core network element (for example, an SMF, an AMF, or an NWDAF).

A network management service consumer entity is a management service consumer logical entity or physical entity deployed in the EMS, and is an invoker of a management service. In embodiments of this application, the network management service consumer entity is a collection service consumer, and is responsible for delivering a measurement task and obtaining a measurement report. The network management service consumer entity receives the measurement report reported by the NF, that is, the network management service consumer entity collects measurement data of each NF of the EMS.

The network management service provider entity is a management service provider logical entity or physical entity deployed in the NF, and is a provider of the management service. In embodiments of this application, the network management service provider entity is a collection service producer, and is responsible for establishing the measurement task, generating the measurement data, and sending the measurement report to the network management service consumer entity. The measurement report includes the measurement data.

One or more service applications may be further deployed in the EMS. The service application is an application subject of the measurement data, and processes and analyzes the measurement data, to monitor a network status, or generate or modify a network configuration command. For example, the service application may be network twin construction, performance prediction, fault prediction, or the like. The network configuration command may be adjusting an antenna tilt angle of a base station, turning on an algorithm switch of the base station, or the like.

The foregoing network domain may also be referred to as a network object, a network element, or the like. The network domain indicates a physical or logical entity including network devices in a same network management scope. For example, the network domain may be a wireless domain, a core network domain, a transport domain, or a mobile network end-to-end domain. The wireless domain may include a base station, a cell, user equipment (user equipment, UE), a network device in a wireless device management system, and the like. The core network domain may include a core network element, for example, an SMF, an NWDAF, an AMF, or a network device in a core network device management system. The transport domain may include a switch, a router, a network device in a transport network device management system, and the like. The mobile network end-to-end domain includes network devices in the wireless domain, the core network domain, the transport domain, and the NMS, and the like. The network management system NM may also be referred to as an operations support system (operations support system, OSS)/business support system (business support system, BSS) sometimes. The network element is also referred to as a network function. Each network domain may include one or more network elements.

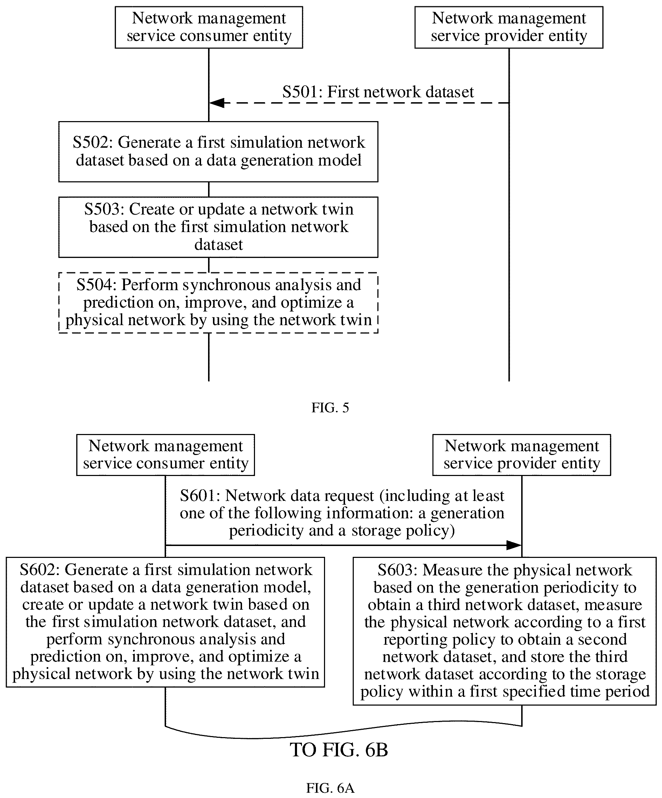

FIG. 5 is a schematic flowchart of a network management method according to an embodiment of this application. For example, the method may include the following steps.

S501: A network management service provider entity sends a first network dataset to a network management service consumer entity.

The first network dataset includes network data collected from a physical network. The first network dataset is used to train a data generation model.

Alternatively, the network management service consumer entity may obtain the first network dataset in advance before implementing this embodiment. Therefore, this step is optional, and is represented by a dashed line in the figure.

The network management service consumer entity obtains the data generation model through training based on the first network dataset.

Common data generation models include naive Bayes, a Gaussian mixture model, a hidden Markov model (HMM), a generative adversarial network (generative adversarial network, GAN), and the like. A model training process is described by using the generative adversarial network as an example. The generative adversarial network is a data generation model. As a deep learning method, a learning/training result of the generative adversarial network is to obtain a generative neural network that can generate a new sample that is extremely similar to a real sample. Model training of the generative adversarial network mainly includes two phases: discriminator training and generator training.

Phase 1: The network management service consumer entity trains a discriminator. In this phase, participation of the first network dataset is needed, and the network management service consumer entity trains a weight and an offset of the discriminator.

(1) The network management service consumer entity inputs random noise into the discriminator to generate a stack of samples using an initialized generative network, and sets labels of the stack of samples to 0.

(2) The network management service consumer entity adds real-world samples to a training set, and sets labels of the samples to 1.

(3) The network management service consumer entity uses these samples and labels to train the discriminator, and adjusts the weight of the discriminator based on an error backpropagation principle of the neural network, for the discriminator to obtain, to some extent, a capability of distinguishing whether the samples are true or false.

Phase 2: The network management service consumer entity trains a generator. In this phase, participation of the first network dataset is not needed, and the network management service consumer entity keeps the weight value and the offset of the discriminator that are obtained in the first phase unchanged, and trains a weight and an offset of the generator.

(1) The network management service consumer entity inputs noise into the generator to generate a batch of samples, and sets all labels of the samples to 1.

(2) When the network management service consumer entity inputs the batch of samples to the discriminator, if the discriminator recognizes the samples and outputs 0, the error is back-propagated to the generator.

(3) The network management service consumer entity continuously adjusts the weight and the offset of the generator in an interactive process based on the error received in step (2), to allow a sample generated by the generator is infinitely close to the real sample.

It should be noted that the data generation model may alternatively be trained by using an external system or manually, and then a trained data generation model is configured in the network service consumer entity. The network management service consumer entity in the foregoing training process may be the external system or may be used for the manual training. This is not limited herein.

S502: The network management service consumer entity generates a first simulation network dataset based on the data generation model.

The network management service consumer entity may obtain the network data of the physical network from the network management service provider entity, to construct and update a network twin. However, to always maintain consistency with the physical network, the network management service consumer entity needs to frequently obtain the network data of the physical network from the network management service provider entity.

In this embodiment, the network management service consumer entity may generate the first simulation network dataset based on the data generation model. The data generation model may be described as a model for generating data, which is a probability model. New simulation data, namely, the first simulation network dataset, that is not included in a training dataset (which is a network dataset, herein is the first network dataset, and includes the collected network data of the physical network) may be generated by using the model. There is a specific similarity between the first simulation network dataset and the first network dataset. For example, there are many images (referred to as training images) of horses. A data generation model is obtained by learning these images of horses, and the data generation model may generate some simulation data. The data can form some images (referred to as simulation images) of horses that look real, but the simulation images do not belong to the training images.

S503: The network management service consumer entity creates or updates the network twin based on the first simulation network dataset.

Because there is specific similarity between the first simulation network dataset and the first network dataset, the network management service consumer entity may create or update the network twin based on the first simulation network dataset. The network twin is a digital representation (digital representation) of the physical network for emulating the physical network. The digital representation may also be referred to as a digital mirror (digital mirror).

Because there is specific similarity (the similarity is associated with a training status of the data generation model) between the first simulation network dataset and the first network dataset, the network twin created or updated by the network management service consumer entity based on the first simulation network dataset is also a mirror close to the network data of the physical network.

In a specific time period, the network management service consumer entity does not need to obtain data from the network management service provider entity, and may create or update the network twin based on the first simulation network dataset. In this way, network data transmission of the physical network is reduced, thereby reducing consumption of transmission resources.

S504: The network management service consumer entity performs synchronous analysis and prediction on, improves, and optimizes the physical network by using the network twin.

The network management service consumer entity may perform synchronous analysis and prediction on, improve, and optimize the physical network by using the created or updated network twin. For example, network performance prediction, fault detection, and the like are performed, and then the network is improved and optimized by using a prediction result or a fault detection result.

According to the network management method provided in this embodiment of this application, the network twin is created or updated by using the simulation network dataset generated based on the data generation model, so that the data does not need to be frequently obtained from the network management service provider entity. This reduces the network data transmission of the physical network, thereby reducing the consumption of the transmission resources.

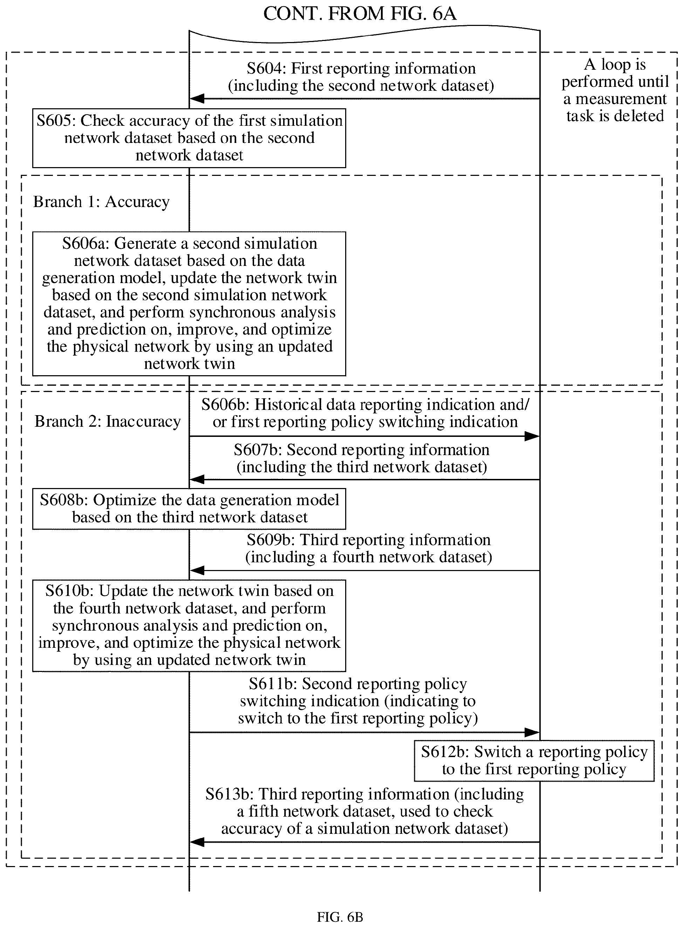

FIG. 6A and FIG. 6B are a schematic flowchart of another network management method according to an embodiment of this application. In this embodiment, a network management service consumer entity optimizes a data generation model. For example, the method may include the following steps.

S601: The network management service consumer entity sends a network data request to a network management service provider entity.

Correspondingly, the network management service provider entity receives the network data request.

The network management service consumer entity indicates the network management service provider entity to send network data of a physical network to the network management service consumer entity. For example, the network management service consumer entity may send the network data request to the network management service provider entity. The network data request may also be referred to as measurement task creation request information.

The network data request is used to request the network management service provider entity to generate and report the network data. The network data request includes at least one of the following information: a generation periodicity and a storage policy.

The generation periodicity indicates a first time interval between two times of generating the network data by the network management service provider entity. The network data request includes completing monitoring of a specified network parameter, for example, monitoring of a network parameter like bandwidth, a throughput, or a delay. The generation periodicity may be, for example, a granularity period. The network data is a measurement result of the physical network. For example, the network data is a value corresponding to a detected network parameter. For example, a detected delay is 10 ms, and a detected throughput is 10 kbps.

The network data request may further include a first reporting policy. The first reporting policy indicates to report a small amount of measurement data, that is, not to report all measurement data generated based on the generation periodicity. For example, the first reporting policy includes at least one of the following information: a first data obtaining periodicity and a first reporting periodicity.

The first data obtaining periodicity indicates a second time interval that is between two times of network data in a second network dataset and that occurs when the network management service provider entity generates the second network dataset. The first data obtaining periodicity is greater than or equal to the generation periodicity. That is, in this embodiment, the network management service consumer entity indicates the network management service provider entity to obtain the network data in the first data obtaining periodicity less than or equal to the generation periodicity, to generate the second network dataset. The first data obtaining periodicity is the second time interval between the two times of network data in the second network dataset.

The second network dataset includes network data collected based on one or more first data obtaining periodicities. That is, the network management service consumer entity indicates the network management service provider entity to obtain the network data based on the first data obtaining periodicity and then report the network data. The first reporting periodicity indicates a reporting time interval between two second network datasets.

For example, the generation periodicity of the network data is 5 minutes, and the first reporting policy indicates that the first data obtaining periodicity is 10 minutes, and indicates that the first reporting periodicity is 1 hour, that is, indicates the network management service provider entity to report network data collected every 10 minutes within the 1 hour.

The network data that is of the physical network and that is obtained through measurement based on the generation periodicity is used as a third network dataset. The third network dataset is a relatively complete network dataset. Although the current network management service consumer entity indicates the network management service provider entity to report the second network dataset, the network management service provider entity should still store the third network dataset. Certainly, to improve utilization of a storage resource, the network management service provider entity does not permanently store the third network dataset. The network management service consumer entity may indicate, according to the storage policy, the network management service provider entity to store the third network dataset for how long. The storage policy indicates to store, as the third network dataset within a first specified time period, network data generated based on the generation periodicity, or the storage policy indicates to store network data generated based on the generation periodicity for a first specified quantity of times. The first specified time period and the first specified quantity of times may be set based on historical experience.

S602: The network management service consumer entity generates a first simulation network dataset based on the data generation model, creates or updates a network twin based on the first simulation network dataset, and performs synchronous analysis and prediction on, improves, and optimizes the physical network by using the network twin.

The network management service consumer entity may obtain the network data of the physical network from the network management service provider entity, to construct and update the network twin. However, to always maintain consistency with the physical network, the network management service consumer entity needs to frequently collect data from the network management service provider entity.

In this embodiment, the network management service consumer entity may generate the first simulation network dataset based on the data generation model. A process of simulating and generating data is described by using an example in which a generative adversarial network generates data. The network management service consumer entity uses a generator to generate a synthetic dataset by using random sample data, and then uses a discriminator to remove data that is considered to be greatly different from a real network from the synthetic data, to obtain a simulation dataset close to the real network. The data generation model may be described as a model for generating data, and is a probability model. New simulation data, that is, the first simulation network dataset, that is not included in a training dataset (which is a network dataset, herein is a first network dataset, and includes the collected network data of the physical network) may be generated by using the model. There is a specific similarity between the first simulation network dataset and the first network dataset. For example, there are many images (referred to as training images) of horses. A data generation model is obtained by learning these images of horses, and the data generation model may generate some simulation data. The data can form some images (referred to as simulation images) of horses that look real, but the simulation images do not belong to the training images. Therefore, the data generation model is obtained through training based on the first network dataset, and the first network dataset may be received from the network management service provider entity in advance.

Because there is specific similarity between the first simulation network dataset and the first network dataset, the network management service consumer entity may create or update the network twin based on the first simulation network dataset. The network twin is a digital representation of the physical network for emulating the physical network.

Because there is specific similarity (the similarity is associated with training of the data generation model) between the first simulation network dataset and the first network dataset, the network twin created or updated by the network management service consumer entity based on the first simulation network dataset is also a mirror close to the network data of the physical network.

In a specific time period, the network management service consumer entity does not need to obtain data from the network management service provider entity, and may create or update the network twin based on the first simulation network dataset. In this way, network data transmission of the physical network is reduced, thereby reducing consumption of transmission resources.

The network management service consumer entity may perform synchronous analysis and prediction on, improve, and optimize the physical network by using the created or updated network twin. For example, network performance prediction, fault detection, and the like are performed, and then the network is improved and optimized by using a prediction result or a fault detection result.

S603: The network management service provider entity measures the physical network based on the generation periodicity to obtain the third network dataset, measures the physical network according to the first reporting policy to obtain the second network dataset, and stores the third network dataset according to the storage policy within the first specified time period.

The network management service provider entity measures a running status of the physical network based on the generation periodicity carried in the network data request, to obtain the third network dataset. For example, the generation periodicity is 5 minutes, and the network management service provider entity measures the running status of the physical network every 5 minutes, to obtain the third network dataset.

The network management service provider entity measures the running status of the physical network based on the first data obtaining periodicity in the first reporting policy carried in the network data request, to obtain the second network dataset. For example, the first data obtaining periodicity is 10 minutes, and the network management service provider entity measures the running status of the physical network every 10 minutes, to obtain the second network dataset.

The network management service provider entity stores the third network dataset according to the storage policy within the first specified time period. For example, if the first specified time period is 12 hours, the network management service provider entity stores network data generated within the 12 hours based on the generation periodicity. After the 12 hours, the previously stored network data is deleted in sequence. For example, network data generated in a time period from 00:00 to 12:00 is stored, and network data generated in a time period from 00:00 to 01:00 is deleted at 13:00, and so on. Alternatively, the storage policy indicates to store the network data generated based on the generation periodicity for the first specified quantity of times. The first specified quantity of times is 60, and the network management service provider entity measures the running status of the physical network based on the generation periodicity, and stores network data obtained through 60 times of measurement. After the 60 times, the previously stored network data is deleted in sequence, and only latest 60 times of network data is stored.

For example, steps S602 and S603 may be simultaneously performed, or may be sequentially performed. An execution sequence of the steps is not limited in this application.

S604: The network management service provider entity sends first reporting information to the network management service consumer entity according to the first reporting policy.

After obtaining the second network dataset, the network management service provider entity sends the first reporting information to the network management service consumer entity, where the first reporting information includes the second network dataset. That is, the network management service provider entity reports a small amount of data.

S605: The network management service consumer entity checks accuracy of the first simulation network dataset based on the second network dataset.

In the foregoing steps, it is described that the network management service consumer entity creates or updates the network twin within specific time based on the first simulation network dataset generated based on the data generation model. However, although there is a specific similarity between the first simulation network dataset and the first network dataset, the physical network keeps running, that is, keeps changing, and because the data generation model is obtained through the training based on the first network dataset and is not always updated, whether the first simulation network dataset is accurate needs to be checked within specific time. Otherwise, if accuracy of the first simulation network dataset is not checked within the specific time, an inaccurate first simulation network dataset is always used to update the network twin, and a network data difference between the network twin and the physical network is larger. For example, the network management service consumer entity may perform the check periodically or based on event triggering.

For example, after receiving the first reporting information, the network management service consumer entity may compare the first simulation network dataset with the second network dataset carried in the first reporting information. The network management service consumer entity determines, based on differential information between the first simulation network dataset and the second network dataset, that the first simulation network dataset is inaccurate. The second network dataset is obtained based on the data obtaining periodicity. When the first simulation network dataset is compared with the second network dataset, the first simulation network dataset and the second network dataset that are at a corresponding moment may be compared based on the data obtaining periodicity. The first simulation network dataset and the second network dataset each include a plurality of types of data. For each type of data in the first simulation network dataset and the second network dataset, an error is learned by comparing each type of data in the first simulation network dataset and the type of data in the second network dataset that are at the corresponding moment, and weighted summation is performed on error comparison results of the plurality of types of data. When a weighted summation result is greater than or equal to a specified threshold, it may be determined that the first simulation network dataset is inaccurate.

Depending on whether a check result is accuracy or inaccuracy, either of the following branches is performed.

### Branch 1:

S606a: If the check result is the accuracy, the network management service consumer entity generates a second simulation network dataset based on the data generation model, updates the network twin based on the second simulation network dataset, and performs synchronous analysis and prediction on, improves, and optimizes the physical network by using an updated network twin.

When an error between the first simulation network dataset and the second network dataset is less than a first threshold, the network management service consumer entity may continue to generate the second simulation network dataset based on the data generation model, and update the network twin based on the second simulation network dataset. The second simulation network dataset may be the same as or different from the first simulation network dataset. For example, the second simulation network dataset may be generated when the data generation model runs to a next phase.

The network management service consumer entity may perform synchronous analysis and prediction on, improve, and optimize the physical network by using the updated network twin. For example, network performance prediction, fault detection, and the like are performed, and then the network is improved and optimized by using a prediction result or a fault detection result.

The network management service consumer entity continues to update the network twin based on the second simulation network dataset within specific time. This process is a loop (loop): After receiving a small amount of reported network data next time, the network management service consumer entity checks, based on the received small amount of network data, whether the second simulation network dataset is accurate. If the second simulation network dataset is accurate, the branch 1 is performed. If the second simulation network dataset is inaccurate, a branch 2 is performed until a measurement task is deleted.

### Branch 2:

S606b: If the check result is the inaccuracy, the network management service consumer entity sends a historical data reporting indication and/or a first reporting policy switching indication to the network management service provider entity.

When an error between the first simulation network dataset and the second network dataset is greater than or equal to a first threshold, it is determined that the check result is the inaccuracy, and the network management service consumer entity sends the historical data reporting indication to the network management service provider entity. The historical data reporting indication indicates to report a historical network dataset of the physical network, and indicates to report complete data (or referred to as full data). For example, the historical data reporting indication indicates the network management service provider entity to report the third network dataset. The third network dataset is a historical complete network dataset generated before the check.

The network management service consumer entity may further send the first reporting policy switching indication to the network management service provider entity, where the first reporting policy switching indication indicates to reduce the data obtaining periodicity and the reporting periodicity of the network dataset of the physical network, or increase a data obtaining frequency and a reporting frequency of the network dataset of the physical network. For example, the first reporting policy switching indication indicates to switch to a second reporting policy. The second reporting policy includes at least one of the following information: a second data obtaining periodicity and a second reporting periodicity, where the second data obtaining periodicity is less than the first data obtaining periodicity, and the second reporting periodicity is less than the first reporting periodicity. For example, the generation periodicity of the network data is 5 minutes, the first reporting policy indicates that the first data obtaining periodicity is 10 minutes, and indicates that the first reporting periodicity is 1 hour, and the second reporting policy indicates that the second data obtaining periodicity is 5, 6, 7, 8, or 9 minutes and the second reporting periodicity is 10 minutes. For example, the network management service consumer entity sends a reporting update request to the network management service provider entity, where the reporting update request includes the historical data reporting indication and the first reporting policy switching indication. In this case, after receiving the reporting update request, the network management service provider entity obtains the second reporting policy carried in the reporting update request, and updates the first reporting policy of the network management service provider entity to the second reporting policy. Alternatively, the network management service consumer entity may simultaneously send the historical data reporting indication and the first reporting policy switching indication to the network management service provider entity. After receiving the first reporting policy switching indication, the network management service provider entity updates the first reporting policy of the network management service provider entity to the second reporting policy based on the first reporting policy switching indication. Alternatively, the network management service consumer entity may sequentially send the historical data reporting indication and the first reporting policy switching indication to the network management service provider entity. After receiving the first reporting policy switching indication, the network management service provider entity updates the first reporting policy of the network management service provider entity to the second reporting policy based on the first reporting policy switching indication.

Further, the network management service consumer entity may stop using the data generation model to generate the simulation network data.

S607b: The network management service provider entity sends second reporting information to the network management service consumer entity.

After receiving the reporting update request, the network management service provider entity sends the second reporting information to the network management service consumer entity, where the second reporting information includes the previously obtained third network dataset.

S608b: The network management service consumer entity optimizes the data generation model based on the third network dataset.

Because the check result of the first simulation network dataset is the inaccuracy, after receiving the historical complete third network dataset, the network management service consumer entity optimizes the data generation model based on the third network dataset.

Because the data generation model is optimized based on the third network dataset, an optimized network twin is consistent with the physical network.

S609b: The network management service provider entity sends third reporting information to the network management service consumer entity.

After the network management service provider entity switches the reporting policy to the second reporting policy, where the second reporting policy indicates to report complete data, in a future period of time (for example, before a new reporting policy switching indication is received), the network management service provider entity reports a complete network dataset to the network management service consumer entity. For example, the network management service provider entity measures the running status of the physical network based on the generation periodicity within a second time period, to obtain a fourth network dataset. In other words, the fourth network dataset includes a part or all of network data generated by the network management service provider entity based on the generation periodicity within the second time period. Then, the network management service provider entity sends the third reporting information to the network management service consumer entity, where the third reporting information includes the fourth network dataset.

S610b: The network management service consumer entity updates the network twin based on the fourth network dataset, and performs synchronous analysis and prediction on, improves, and optimizes the physical network by using an updated network twin.

The network management service consumer entity updates the network twin based on a complete fourth network dataset, so that the network twin can be consistent with the physical network.

The network management service consumer entity may perform synchronous analysis and prediction on, improve, and optimize the physical network by using the updated network twin. For example, network performance prediction, fault detection, and the like are performed, and then the network is improved and optimized by using a prediction result or a fault detection result.

S611b: The network management service consumer entity sends a second reporting policy switching indication to the network management service provider entity.

After the network management service consumer entity updates the network twin by using a complete historical network dataset and a complete network dataset that is in a period of time after the check, the network twin is consistent with the physical network. To further reduce transmission resource overheads for reporting data by the network management service provider entity to the network management service consumer entity, when the network twin is highly consistent with the physical network, the network twin may continue to be updated based on the simulation network dataset generated based on the data generation model. Therefore, the network management service consumer entity sends the second reporting policy switching indication to the network management service provider entity, where the second reporting policy switching indication indicates to switch to the first reporting policy, and the first reporting policy indicates to report a small amount of network data.

For example, the second reporting policy switching indication may include the first reporting policy. Alternatively, the second reporting policy switching indication may be empty. When the second reporting policy switching indication is empty, the network management service consumer entity switches the reporting policy to the first reporting policy carried in the network data request.

S612b: The network management service provider entity switches the reporting policy to the first reporting policy.

After receiving the second reporting policy switching indication, the network management service provider entity switches the reporting policy to the first reporting policy based on the second reporting policy switching indication.

S613b: The network management service provider entity sends the third reporting information to the network management service consumer entity according to the first reporting policy.

After switching the reporting policy to the first reporting policy, the network management service provider entity measures the running status of the physical network based on the data obtaining periodicity in the first reporting policy, to generate a fifth network dataset. In addition, the network management service provider entity sends the third reporting information to the network management service consumer entity based on the reporting periodicity in the first reporting policy, where the third reporting information includes the fifth network dataset, and the fifth network dataset is used to check accuracy of a simulation network dataset subsequently used by the data generation model.

For example, the foregoing steps S606b to S613b are a loop. After a small amount of reported network data is received next time, whether a second simulation network dataset is accurate is checked based on the received small amount of network data. If the second simulation network dataset is accurate, the branch 1 is performed. If the second simulation network dataset is inaccurate, the branch 2 is performed until a measurement task is deleted.

According to the network management method provided in this embodiment of this application, the network twin is created or updated by using the simulation network dataset generated based on the data generation model, so that the data does not need to be frequently obtained from the network management service provider entity. This reduces the network data transmission of the physical network, thereby reducing the consumption of the transmission resources.

In addition, the network management service provider entity reports the small amount of network data, so that the network management service consumer entity can check the simulation network dataset based on the small amount of network data. In this way, the consumption of the transmission resources can be reduced when the consistency between the network twin created or updated based on the simulation network dataset and the physical network meets a requirement.

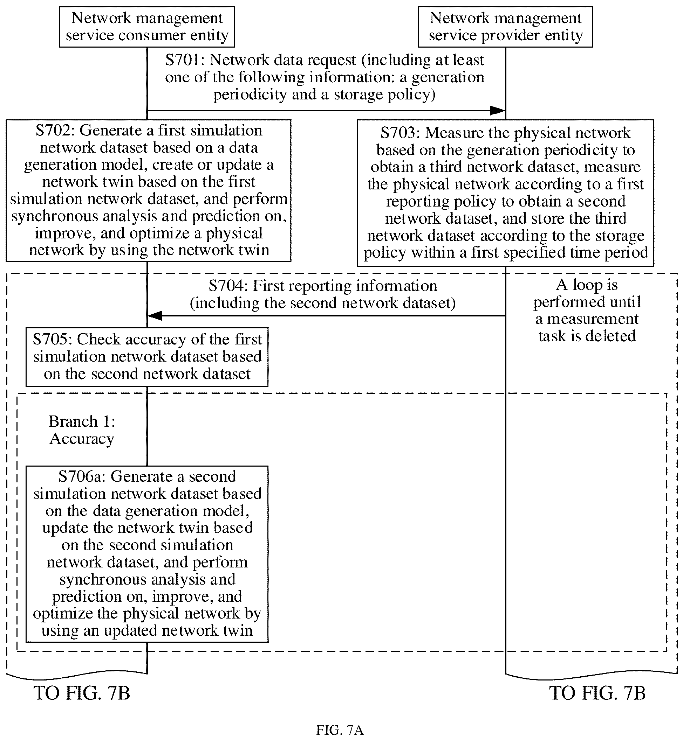

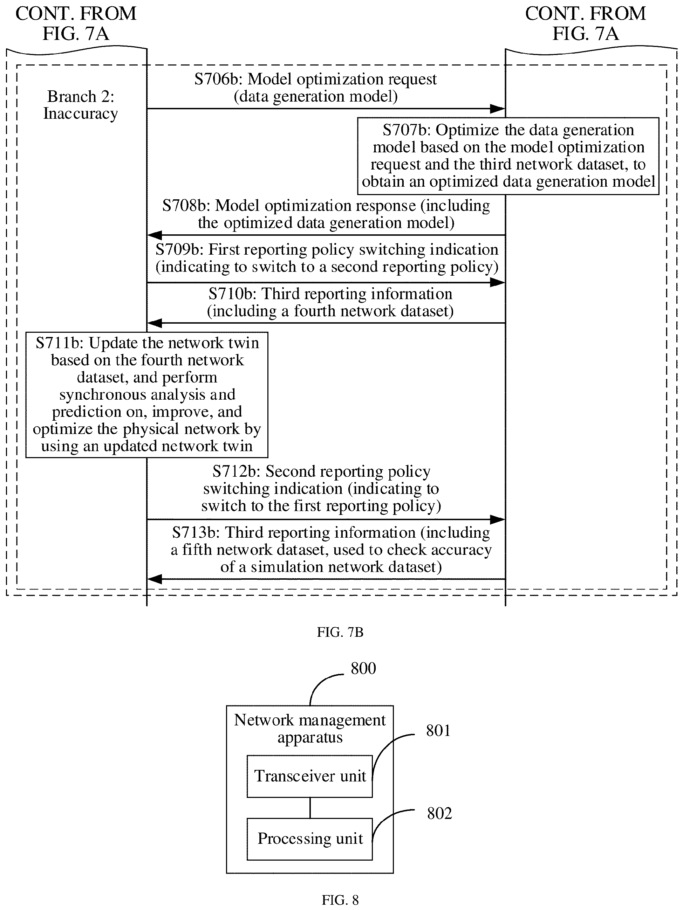

FIG. 7A and FIG. 7B are a schematic flowchart of still another network management method according to an embodiment of this application. In this embodiment, a network management service provider entity optimizes a data generation model. For example, the method may include the following steps.

S701: A network management service consumer entity sends a network data request to the network management service provider entity.

Correspondingly, the network management service provider entity receives the network data request.

For specific implementation of this step, refer to step S601 in the embodiment shown in FIG. 6A and FIG. 6B. Details are not described herein again.

S702: The network management service consumer entity generates a first simulation network dataset based on the data generation model, creates or updates a network twin based on the first simulation network dataset, and performs synchronous analysis and prediction on, improves, and optimizes a physical network by using the network twin.

For specific implementation of this step, refer to step S602 in the embodiment shown in FIG. 6A and FIG. 6B. Details are not described herein again.

S703: The network management service provider entity measures the physical network based on a generation periodicity to obtain a third network dataset, measures the physical network according to a first reporting policy to obtain a second network dataset, and stores the third network dataset according to a storage policy within a first specified time period.

For specific implementation of this step, refer to step S603 in the embodiment shown in FIG. 6A and FIG. 6B. Details are not described herein again.

For example, steps S702 and S703 may be simultaneously performed, or may be sequentially performed. An execution sequence of the steps is not limited in this application.

S704: The network management service provider entity sends first reporting information to the network management service consumer entity according to the first reporting policy.

For specific implementation of this step, refer to step S604 in the embodiment shown in FIG. 6A and FIG. 6B. Details are not described herein again.

S705: The network management service consumer entity checks accuracy of the first simulation network dataset based on the second network dataset.

For specific implementation of this step, refer to step S605 in the embodiment shown in FIG. 6A and FIG. 6B. Details are not described herein again.

Depending on whether a check result is accuracy or inaccuracy, either of the following branches is performed.

### Branch 1:

S706a: If the check result is the accuracy, the network management service consumer entity generates a second simulation network dataset based on the data generation model, updates the network twin based on the second simulation network dataset, and performs synchronous analysis and prediction on, improves, and optimizes the physical network by using an updated network twin.

For specific implementation of this step, refer to step S606a in the embodiment shown in FIG. 6A and FIG. 6B. Details are not described herein again.

### Branch 2:

S706b: If the check result is the inaccuracy, the network management service consumer entity sends a model optimization request to the network management service provider entity.

When an error between the first simulation network dataset and the second network dataset is greater than or equal to a first threshold, it is determined that the check result is the inaccuracy, and the network management service consumer entity sends the model optimization request to the network management service provider entity. The model optimization request is used to request the network management service provider entity to optimize the data generation model. The model optimization request includes the data generation model.

Further, the network management service consumer entity may stop using the data generation model to generate simulation network data.

S707b: The network management service provider entity optimizes the data generation model based on the model optimization request and the third network dataset, to obtain an optimized data generation model.

Because the result of the check performed by the network management service consumer entity on the first simulation network dataset is the inaccuracy, after receiving the model optimization request, the network management service provider entity optimizes the data generation model based on the stored third network dataset.

Because the data generation model is optimized based on the third network dataset, network data of an optimized network twin is consistent with that of the physical network.

S708b: The network management service provider entity sends a model optimization response to the network management service consumer entity.

The model optimization response includes the optimized data generation model.

S709b: The network management service consumer entity sends a first reporting policy switching indication to the network management service provider entity.

The network management service consumer entity may further send the first reporting policy switching indication to the network management service provider entity, where the first reporting policy switching indication indicates to switch to a second reporting policy. The second reporting policy indicates to report complete data.

S710b: The network management service provider entity sends third reporting information to the network management service consumer entity.

After the network management service provider entity switches the reporting policy to the second reporting policy, where the second reporting policy indicates to report the complete data, in a future period of time (for example, before a new policy indication is received), the network management service provider entity reports a complete network dataset to the network management service consumer entity. For example, the network management service provider entity measures a running status of the physical network based on the generation periodicity within a second time period, to obtain a fourth network dataset. In other words, the fourth network dataset includes network data generated by the network management service provider entity based on the generation periodicity within the second time period. Then, the network management service provider entity sends the third reporting information to the network management service consumer entity, where the third reporting information includes the fourth network dataset.

S711b: The network management service consumer entity updates the network twin based on the fourth network dataset, and performs synchronous analysis and prediction on, improves, and optimizes the physical network by using an updated network twin.

The network management service consumer entity updates the network twin based on a complete fourth network dataset, so that network data of the network twin can be consistent with that of the physical network.

S712b: The network management service consumer entity sends a second reporting policy switching indication to the network management service provider entity.

For specific implementation of this step, refer to step S611b in the embodiment shown in FIG. 6A and FIG. 6B. Details are not described herein again.

After receiving the second policy switching indication, the network management service provider entity switches the reporting policy to the first reporting policy based on the second policy switching indication.

S713b: The network management service provider entity sends the third reporting information to the network management service consumer entity according to the first reporting policy.

For specific implementation of this step, refer to step S613b in the embodiment shown in FIG. 6A and FIG. 6B. Details are not described herein again.

For example, the foregoing steps S706b to S713b are a loop. After a small amount of reported network data is received next time, whether a second simulation network dataset is accurate is checked based on the received small amount of network data. If the second simulation network dataset is accurate, the branch 1 is performed. If the second simulation network dataset is inaccurate, the branch 2 is performed until a measurement task is deleted.

According to the network management method provided in this embodiment of this application, the network twin is created or updated by using the simulation network dataset generated based on the data generation model, so that data does not need to be frequently obtained from the network management service provider entity. This reduces network data transmission of the physical network, thereby reducing consumption of transmission resources.

In addition, the network management service provider entity reports the small amount of network data, so that the network management service consumer entity can check the simulation network dataset based on the small amount of network data. In this way, the consumption of the transmission resources can be reduced when the consistency between the network data of the network twin created or updated based on the simulation network dataset and the network data of the physical network meets a requirement.

In addition, the network management service provider entity optimizes the data generation model, to further reduce transmission of the network dataset, and reduce the consumption of the transmission resources.

It may be understood that, in the foregoing embodiments, the method and/or the step implemented by the network management service provider entity may alternatively be implemented by a component (for example, a chip or a circuit) that can be used in the network management service provider entity, and the method and/or the step implemented by the network management service consumer entity may alternatively be implemented by a component (for example, a chip or a circuit) that can be used in the network management service consumer entity.

The foregoing mainly describes the solutions provided in embodiments of this application from a perspective of interaction between network elements. Correspondingly, an embodiment of this application further provides a network management apparatus. The network management apparatus is configured to implement the foregoing methods. The network management apparatus may be the network management service provider entity in the foregoing method embodiments, or may be a component that can be used in the network management service provider entity. Alternatively, the network management apparatus may be the network management service consumer entity in the foregoing method embodiments, or may be a component that can be used in the network management service consumer entity. It may be understood that, to implement the foregoing functions, the network management apparatus includes a corresponding hardware structure and/or software module for performing the functions. Persons skilled in the art should be easily aware that, in combination with examples of units and algorithm steps described in embodiments disclosed in this specification, this application can be implemented by using hardware or a combination of hardware and computer software. Whether a function is performed by hardware or hardware driven by computer software depends on a particular application and a design constraint condition of the technical solutions. Persons skilled in the art may use different methods to implement the described functions for each particular application, but it should not be considered that the implementation goes beyond the scope of this application.

In embodiments of this application, division into functional modules may be performed on the network management apparatus based on the foregoing method embodiments. For example, division into functional modules may be performed based on corresponding functions, or two or more functions may be integrated into one processing module. The integrated module may be implemented in a form of hardware, or may be implemented in a form of a software functional module. It should be noted that, in embodiments of this application, division into the modules is an example, and is merely logical function division. In actual implementation, another division manner may be used.

Based on a same concept as the foregoing network management method, this application further provides the following network management apparatuses.

FIG. 8 is a diagram of a structure of a network management apparatus according to an embodiment of this application. The network management apparatus 800 includes a transceiver unit 801 and a processing unit 802.

The network management apparatus 800 is configured to implement functions of the network management service consumer entity in the foregoing embodiments. The processing unit 802 is configured to generate a first simulation network dataset based on a data generation model, where the data generation model is obtained through training based on a first network dataset, and the first network dataset includes network data collected from a physical network. In addition, the processing unit 802 is further configured to create or update a network twin based on the first simulation network dataset, where the network twin is a digital representation of the physical network for emulating the physical network.

The network twin is created or updated by using the simulation network dataset generated based on the data generation model, so that data does not need to be frequently obtained from a network management service provider entity. This reduces network data transmission of the physical network, thereby reducing consumption of transmission resources.

Optionally, the apparatus further includes the transceiver unit 801. The transceiver unit 801 is configured to receive the first network dataset from the network management service provider entity.

Optionally, the processing unit 802 is further configured to: check accuracy of the first simulation network dataset based on a second network dataset, and update the data generation model, where the second network dataset includes network data collected from the physical network.

The network management service consumer entity may create or update the network twin within specific time based on the first simulation network dataset generated based on the data generation model. However, although there is a specific similarity between the first simulation network dataset and the first network dataset, the physical network keeps running, that is, keeps changing, and because the data generation model is obtained through the training based on the first network dataset and is not always updated, whether the first simulation network dataset is accurate needs to be checked within specific time. Otherwise, if accuracy of the first simulation network dataset is not checked within the specific time, an inaccurate first simulation network dataset is always used to update the network twin, and a network data difference between the network twin and the physical network is larger. Whether the first simulation network dataset is accurate may be checked based on the second network dataset reported by the network management provider entity.

Optionally, the processing unit 802 is further configured to determine, based on differential information between the first simulation network dataset and the second network dataset, whether the first simulation network dataset is accurate.

Optionally, the processing unit 802 is further configured to update the data generation model by using a third network dataset, where the third network dataset includes network data collected from the physical network.

When a check result is inaccuracy, the data generation model is updated by using the third network dataset reported by the network management provider entity, to improve accuracy of the data generation model.

Optionally, the transceiver unit 801 is further configured to indicate the network management service provider entity to send the network data of the physical network to the network management service consumer entity.

Optionally, the transceiver unit 801 is further configured to send a network data request to the network management service provider entity, where the network data request is used to request the network management service provider entity to generate and report the network data, and the network data request includes at least one of the following information: a generation periodicity and a storage policy. In addition, the transceiver unit 801 is further configured to receive the second network dataset of the network management service provider entity.

The network management service provider entity reports a small amount of network data, so that the network management service consumer entity can check the simulation network dataset based on the small amount of network data. In this way, the consumption of the transmission resources can be reduced when consistency between network data of the network twin created or updated based on the simulation network dataset and the network data of the physical network meets a requirement.

Optionally, the generation periodicity indicates a first time interval between two times of generating the network data by the network management service provider entity. The storage policy indicates to store, as the third network dataset within a first specified time period, network data generated based on the generation periodicity.

Optionally, the measurement task creation request information further includes a first reporting policy, where the first reporting policy includes at least one of the following information: a first data obtaining periodicity and a first reporting periodicity. The first data obtaining periodicity indicates a second time interval between two times of obtaining the network data in the second network dataset by the network management service provider entity when the second network dataset is generated, where the first data obtaining periodicity is greater than or equal to the generation periodicity. The first reporting periodicity indicates a time interval between reporting two second network datasets.

Optionally, the transceiver unit 801 is further configured to send a historical data reporting indication to the network management service provider entity, where the historical data reporting indication indicates the network management service provider entity to report the third network dataset. The transceiver unit 801 is further configured to receive first reporting information from the network management service provider entity, where the first reporting information includes the third network dataset. In addition, the processing unit 802 is further configured to optimize the data generation model based on the third network dataset.

When the check result of the first simulation network dataset is the inaccuracy, the network management service provider entity is indicated to report historical data, and the data generation model is optimized based on the reported third network dataset, to improve the accuracy of the data generation model.

Optionally, the transceiver unit 801 is further configured to send a model optimization request to the network management service provider entity, where the model optimization request includes the data generation model. The transceiver unit 801 is further configured to receive a model optimization response from the network management service provider entity, where the model optimization response includes an optimized data generation model, and the optimized data generation model is obtained by the network management service provider entity by optimizing the data generation model based on the third network dataset.

Optionally, the transceiver unit 801 is further configured to send a reporting policy switching indication to the network management service provider entity, where the reporting policy switching indication indicates to switch to a second reporting policy, the second reporting policy includes at least one of the following information: a second data obtaining periodicity and a second reporting periodicity, the second data obtaining periodicity is less than the first data obtaining periodicity, and the second reporting periodicity is less than the first reporting periodicity. The transceiver unit 801 is further configured to receive second reporting information from the network management service provider entity, where the second reporting information includes a fourth network dataset, the fourth network dataset includes a part or all of the network data generated by the network management service provider entity based on the generation periodicity within a second time period, and a time interval between two times of obtaining the network data in the fourth network dataset is less than the first data obtaining periodicity. In addition, the processing unit 802 is further configured to update the network twin based on the fourth network dataset.

When the check result of the first simulation network dataset is the inaccuracy, the network management service provider entity is indicated to switch the reporting policy, where the reporting policy switching indication indicates to reduce the data obtaining periodicity and the reporting periodicity of the network dataset of the physical network, and report the fourth network dataset. The network management service consumer entity updates the network twin based on the fourth network dataset, to improve consistency between the network twin and the physical network.

Optionally, the processing unit 802 is further configured to: generate a second simulation network dataset based on the data generation model, and update the network twin based on the second simulation network dataset.

When an error between the first simulation network dataset and the second network dataset is less than a first threshold, the network management service consumer entity may continue to generate the second simulation network dataset based on the data generation model, and update the network twin based on the second simulation network dataset. The network management service consumer entity continues to update the network twin based on the second simulation network dataset within specific time. This process is a loop: After receiving a small amount of reported measurement data next time, the network management service consumer entity checks, based on the received small amount of measurement data, whether the second simulation network dataset is accurate.

For function implementation of the transceiver unit 801 and the processing unit 802, refer to related descriptions of the network management service consumer entity in FIG. 5 to FIG. 7A and FIG. 7B.

The network management apparatus 800 is configured to implement functions of the network management service provider entity in the foregoing embodiments. The transceiver unit 801 is configured to receive a historical data reporting indication and a reporting policy switching indication from a network management service consumer entity, where the historical data reporting indication indicates to report a historical network dataset of a physical network, the reporting policy switching indication indicates to reduce a data obtaining periodicity and a reporting periodicity of the network dataset of the physical network, the historical network dataset is used to optimize a data generation model, the data generation model is used to generate a simulation network dataset, the simulation network dataset is used to create or update a network twin, and the network twin is a digital representation of the physical network for emulating the physical network. In addition, the transceiver unit 801 is further configured to: send the historical network dataset to the network management service consumer entity based on the historical data reporting indication, and send a newly generated network dataset to the network management service consumer entity based on the reporting policy switching indication, where the newly generated network dataset is used to update the network twin during the optimization of the data generation model.

Reducing the data obtaining periodicity and the reporting periodicity of the network dataset of the physical network may alternatively be increasing a data obtaining frequency and a reporting frequency of the network dataset of the physical network.

Optionally, the transceiver unit 801 is further configured to send a first network dataset to the network management service consumer entity, where the first network dataset is used to train the data generation model.

Optionally, the apparatus further includes the processing unit 802. The transceiver unit 801 is further configured to receive a network data request from the network management service consumer entity, where the network data request is used to request the network management service provider entity to generate and report network data, and the network data request includes a generation periodicity and a storage policy. The transceiver unit 801 is further configured to send a second network dataset to the network management service consumer entity, to enable the network management service consumer entity to check accuracy of the simulation network dataset based on the second network dataset, where the second network dataset includes network data collected from the physical network. In addition, the processing unit 802 is configured to store, according to the storage policy, the historical network dataset generated by the network management service provider entity based on the generation periodicity within a first specified time period.

Optionally, the generation periodicity indicates a first time interval between two times of generating the network data by the network management service provider entity. The storage policy indicates to store the historical network dataset generated based on the generation periodicity within the first specified time period.

Optionally, the network data request further includes a reporting policy, where the reporting policy includes at least one of the following information: the data obtaining periodicity and the reporting periodicity. The data obtaining periodicity indicates a second time interval between two times of obtaining the network data in the second network dataset by the network management service provider entity when the second network dataset is generated, where the data obtaining periodicity is greater than or equal to the generation periodicity. The reporting periodicity indicates a time interval between reporting two second network datasets.

Optionally, the transceiver unit 801 is further configured to receive a model optimization request from the network management service consumer entity, where the model optimization request includes the data generation model. The processing unit 802 is further configured to optimize the data generation model based on the model optimization request and a third network dataset, to obtain an optimized data generation model. In addition, the transceiver unit 801 is further configured to send a model optimization response to the network management service consumer entity, where the model optimization response includes the optimized data generation model, and the optimized data generation model is obtained by the network management service provider entity by optimizing the data generation model based on the third network dataset.

For function implementation of the transceiver unit 801 and the processing unit 802, refer to related descriptions of the network management service provider entity in FIG. 5 to FIG. 7A and FIG. 7B.

According to the network management apparatus provided in this embodiment of this application, the network twin is created or updated by using the simulation network dataset generated based on the data generation model, so that data does not need to be frequently obtained from the network management service provider entity. This reduces the network data transmission of the physical network, thereby reducing the consumption of the transmission resources.

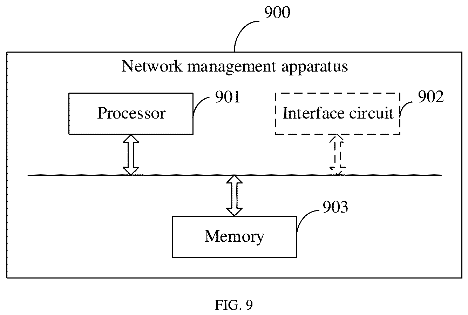

FIG. 9 is a diagram of a structure of another network management apparatus according to an embodiment of this application. The network management apparatus 900 includes a processor 901 and a memory 903. The memory 903 is configured to: store instructions executed by the processor 901, store input data needed by the processor 901 to run instructions, or store data generated by running instructions by the processor 901. Optionally, the network management apparatus 900 may further include an interface circuit 902 (represented by dashed lines in the figure), and the processor 901 and the interface circuit 902 are coupled to each other. It may be understood that the interface circuit 902 may be a transceiver or an input/output interface.

The processor 901 is configured to perform the methods in the method embodiments shown in FIG. 5 to FIG. 7A and FIG. 7B.

When the network management apparatus 900 is configured to implement functions of the network management service consumer entity in the foregoing embodiments, the processor 901 is configured to perform the following steps: generating a first simulation network dataset based on a data generation model, where the data generation model is obtained through training based on a first network dataset, and the first network dataset includes network data collected from a physical network; and creating or updating a network twin based on the first simulation network dataset, where the network twin is a digital representation of the physical network for emulating the physical network.

Optionally, the processor 901 is further configured to perform the following step: receiving the first network dataset from a network management service provider entity using the interface circuit 902.

Optionally, the processor 901 is further configured to perform the following steps: validating accuracy of the first simulation network dataset based on a second network dataset, and updating the data generation model, where the second network dataset includes network data collected from the physical network.

Optionally, that the processor 901 performs the step of validating the accuracy of the first simulation network dataset based on the second network dataset includes: determining, based on differential information between the first simulation network dataset and the second network dataset, whether the first simulation network dataset is accurate.

Optionally, that the processor 901 performs the step of updating the data generation model includes: updating the data generation model by using a third network dataset, where the third network dataset includes network data collected from the physical network.

Optionally, the processor 901 is further configured to perform the following step: indicating, using the interface circuit 902, the network management service provider entity to send the network data of the physical network to the network management apparatus.

Optionally, that the processor 901 performs the step of indicating the network management service provider entity to send the network data of the physical network to the network management apparatus includes: sending a network data request to the network management service provider entity using the interface circuit 902, where the network data request is used to request the network management service provider entity to generate and report the network data, and the network data request includes at least one of the following information: a generation periodicity and a storage policy; and receiving the second network dataset from the network management service provider entity using the interface circuit 902.

Optionally, the generation periodicity indicates a first time interval between two times of generating the network data by the network management service provider entity. The storage policy indicates to store, as the third network dataset within a first specified time period, network data generated based on the generation periodicity.

Optionally, the network data request further includes a first reporting policy, where the first reporting policy includes at least one of the following information: a first data obtaining periodicity and a first reporting periodicity. The first data obtaining periodicity indicates a second time interval between two times of obtaining the network data in the second network dataset by the network management service provider entity when the second network dataset is generated, where the first data obtaining periodicity is greater than or equal to the generation periodicity. The first reporting periodicity indicates a time interval between reporting two second network datasets.

Optionally, the processor 901 is further configured to perform the following steps: when validating that the first simulation network dataset is inaccurate, sending a historical data reporting indication to the network management service provider entity using the interface circuit 902, where the historical data reporting indication indicates the network management service provider entity to report the third network dataset; receiving first reporting information from the network management service provider entity using the interface circuit 902, where the first reporting information includes the third network dataset; and optimizing the data generation model based on the third network dataset.

Optionally, the processor 901 is further configured to perform the following steps: when validating that the first simulation network dataset is inaccurate, sending a model optimization request to the network management service provider entity using the interface circuit 902, where the model optimization request includes the data generation model; and receiving a model optimization response from the network management service provider entity using the interface circuit 902, where the model optimization response includes an optimized data generation model, and the optimized data generation model is obtained by the network management service provider entity by optimizing the data generation model based on the third network dataset.

Optionally, the processor 901 is further configured to perform the following steps: sending a reporting policy switching indication to the network management service provider entity using the interface circuit 902, where the reporting policy switching indication indicates to switch to a second reporting policy, the second reporting policy includes at least one of the following information: a second data obtaining periodicity and a second reporting periodicity, the second data obtaining periodicity is less than the first data obtaining periodicity, and the second reporting periodicity is less than the first reporting periodicity; receiving second reporting information from the network management service provider entity using the interface circuit 902, where the second reporting information includes a fourth network dataset reported according to the second reporting policy, the fourth network dataset includes a part or all of the network data generated by the network management service provider entity based on the generation periodicity within a second time period, and a time interval between two times of obtaining the network data in the fourth network dataset is less than the first data obtaining periodicity; and updating the network twin based on the fourth network dataset.

Optionally, the processor 901 is further configured to perform the following steps: when validating that the first simulation network dataset is accurate, generating a second simulation network dataset based on the data generation model, and updating the network twin based on the second simulation network dataset.

When the network management apparatus 900 is configured to implement functions of the network management service consumer entity in the foregoing embodiments, the processor 901 is configured to perform the following steps: receiving a historical data reporting indication and a reporting policy switching indication from a network management service consumer entity using the interface circuit 902, where the historical data reporting indication indicates to report a historical network dataset of a physical network, the reporting policy switching indication indicates to reduce a data obtaining periodicity and a reporting periodicity of the network dataset of the physical network, the historical network dataset is used to optimize a data generation model, the data generation model is used to generate a simulation network dataset, the simulation network dataset is used to create or update a network twin, and the network twin is a digital representation of the physical network for emulating the physical network; sending the historical network dataset to the network management service consumer entity based on the historical data reporting indication using the interface circuit 902; and sending a newly generated network dataset to the network management service consumer entity based on the reporting policy switching indication using the interface circuit 902, where the newly generated network dataset is used to update the network twin during the optimization of the data generation model.

Reducing the data obtaining periodicity and the reporting periodicity of the network dataset of the physical network may alternatively be increasing a data obtaining frequency and a reporting frequency of the network dataset of the physical network.

Optionally, the processor 901 is further configured to perform the following step: sending a first network dataset to the network management service consumer entity using the interface circuit 902, where the first network dataset is used to train the data generation model.

Optionally, the processor 901 is further configured to perform the following steps: receiving a network data request from the network management service consumer entity using the interface circuit 902, where the network data request is used to request the network management service provider entity to generate and report network data, and the network data request includes a generation periodicity and a storage policy; sending a second network dataset to the network management service consumer entity using the interface circuit 902, to enable the network management service consumer entity to check accuracy of the simulation network dataset based on the second network dataset, where the second network dataset includes network data collected from the physical network; and storing, according to the storage policy, the historical network dataset generated by the network management service provider entity based on the generation periodicity within a first specified time period.

Optionally, the generation periodicity indicates a first time interval between two times of generating the network data by the network management service provider entity. The storage policy indicates to store the historical network dataset generated based on the generation periodicity within the first specified time period.

Optionally, the network data request further includes a reporting policy, where the reporting policy includes at least one of the following information: the data obtaining periodicity and the reporting periodicity. The data obtaining periodicity indicates a second time interval between two times of obtaining the network data in the second network dataset by the network management service provider entity when the second network dataset is generated, where the data obtaining periodicity is greater than or equal to the generation periodicity. The reporting periodicity indicates a time interval between reporting two second network datasets.

Optionally, the processor 901 is further configured to perform the following steps: receiving a model optimization request from the network management service consumer entity using the interface circuit 902, where the model optimization request includes the data generation model; optimizing the data generation model based on the model optimization request and a third network dataset, to obtain an optimized data generation model; and sending a model optimization response to the network management service consumer entity using the interface circuit 902, where the model optimization response includes the optimized data generation model, and the optimized data generation model is obtained by the network management service provider entity by optimizing the data generation model based on the third network dataset.

When the network management apparatus is a chip used in the network management service provider entity, the chip implements functions of the network management service provider entity in the foregoing method embodiments. The chip receives information from another module (for example, a radio frequency module or an antenna) in the network management service provider entity, where the information is sent by the network management service consumer entity to the network management service provider entity; or the chip sends information to another module (for example, a radio frequency module or an antenna) in the network management service provider entity, where the information is sent by the network management service provider entity to the network management service consumer entity.

When the network management apparatus is a chip used in the network management service consumer entity, the chip implements functions of the network management service consumer entity in the foregoing method embodiments. The chip receives information from another module (for example, a radio frequency module or an antenna) in the network management service consumer entity, where the information is sent by the network management service provider entity to the network management service consumer entity; or the chip sends information to another module (for example, a radio frequency module or an antenna) in the network management service consumer entity, where the information is sent by the network management service consumer entity to the network management service provider entity.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

An embodiment of this application further provides a computer-readable storage medium. The computer-readable storage medium stores a computer program or instructions. When the computer program or the instructions are executed, the methods in the foregoing embodiments are implemented.

An embodiment of this application further provides a computer program product including instructions. When the instructions are run on a computer, the computer is enabled to perform the methods in the foregoing embodiments.

An embodiment of this application further provides a network management system, including the foregoing network management apparatus.

An embodiment of this application further provides a circuit. The circuit is coupled to a memory, and the circuit is configured to perform the methods shown in the foregoing embodiments. The circuit may include a chip circuit.

It should be noted that one or more of the foregoing units or units may be implemented by software, hardware, or a combination thereof. When any one of the foregoing units or units is implemented by software, the software exists in a form of computer program instructions, and is stored in the memory. The processor may be configured to: execute the program instructions and implement the foregoing method procedures. The processor may be built in a system on chip (system on chip, SoC) or an ASIC, or may be an independent semiconductor chip. In addition to a core for executing software instructions to perform an operation or processing, the processor may further include a necessary hardware accelerator, for example, a field programmable gate array (field programmable gate array, FPGA), a programmable logic device (programmable logic device, PLD), or a logic circuit that implements a special-purpose logic operation.

When the foregoing units or units are implemented by hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not rely on software to perform the foregoing method procedures.

Optionally, an embodiment of this application further provides a chip system, including at least one processor and an interface. The at least one processor is coupled to a memory through the interface. When the at least one processor runs a computer program or instructions in the memory, the chip system is enabled to perform the method in any one of the foregoing method embodiments. Optionally, the chip system may include a chip, or may include a chip and another discrete device. This is not specifically limited in this embodiment of this application.

It should be understood that, in the descriptions of this application, unless otherwise specified, "/" indicates an "or" relationship between associated objects. For example, A/B may indicate A or B, where A and B may be singular or plural. In addition, in the descriptions of this application, unless otherwise specified, "a plurality of" means two or more than two. "At least one of the following items (pieces)" or a similar expression thereof indicates any combination of these items, including a single item (piece) or any combination of a plurality of items (pieces). For example, at least one of a, b, or c may indicate: a, b, c, a and b, a and c, b and c, or a, b, and c, where a, b, and c may be one or more. In addition, to clearly describe the technical solutions in embodiments of this application, terms such as "first" and "second" are used in embodiments of this application to distinguish between same items or similar items that have basically same functions and purposes. Persons skilled in the art may understand that the terms such as "first" and "second" do not limit a quantity or an execution sequence, and the terms such as "first" and "second" do not indicate a definite difference. In addition, in embodiments of this application, the word such as "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word such as "example" or "for example" is intended to present a related concept in a specific manner for ease of understanding.

All or some of the foregoing embodiments may be implemented by software, hardware, firmware, or any combination thereof. When a software program is used to implement embodiments, all or some of embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid-state disk (solid state disk, SSD)), or the like.

Although this application is described with reference to embodiments, in a process of implementing this application that claims protection, persons skilled in the art may understand and implement another variation of the disclosed embodiments by viewing the appended drawings, disclosed content, and the appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a good effect.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

In the foregoing embodiments, the descriptions of embodiments have respective focuses. For a part that is not described in detail in an embodiment, refer to related descriptions of another embodiment.

The components in the apparatuses in embodiments of this application may be combined, divided, and deleted based on an actual need. Persons skilled in the art may combine different embodiments and features of the different embodiments described in this specification.

The foregoing embodiments are merely intended for describing the technical solutions of this application, rather than limiting this application. Although this application is described in detail with reference to the foregoing embodiments, persons of ordinary skill in the art should understand that they may still make modifications to the technical solutions recorded in the foregoing embodiments or make equivalent replacements to some technical features thereof. Such modifications or replacements do not make the essence of the corresponding technical solutions depart from the scope of the technical solutions of embodiments of this application.

## Claims

1. A network management method, wherein the method comprises:
generating, by a network management service consumer entity, a first simulation network dataset based on a data generation model, wherein the data generation model is obtained through training based on a first network dataset, and the first network dataset comprises network data collected from a physical network; and
creating or updating, by the network management service consumer entity, a network twin based on the first simulation network dataset, wherein the network twin is a digital representation of the physical network for emulating the physical network.

2. The method according to claim 1, wherein the method further comprises:
receiving, by the network management service consumer entity, the first network dataset from a network management service provider entity.

3. The method according to claim 1 or 2, wherein the method further comprises:
validating, by the network management service consumer entity, accuracy of the first simulation network dataset based on a second network dataset, and updating the data generation model, wherein the second network dataset comprises network data collected from the physical network.

4. The method according to claim 3, wherein the validating, by the network management service consumer entity, accuracy of the first simulation network dataset based on a second network dataset comprises:
determining, by the network management service consumer entity based on differential information between the first simulation network dataset and the second network dataset, whether the first simulation network dataset is accurate.

5. The method according to claim 3 or 4, wherein the updating the data generation model comprises:
updating, by the network management service consumer entity, the data generation model by using a third network dataset, wherein the third network dataset comprises network data collected from the physical network.

6. The method according to any one of claims 2 to 5, wherein the method further comprises:
indicating, by the network management service consumer entity, the network management service provider entity to send the network data of the physical network to the network management service consumer entity.

7. The method according to claim 6, wherein the indicating, by the network management service consumer entity, the network management service provider entity to send the network data of the physical network to the network management service consumer entity comprises:
sending, by the network management service consumer entity, a network data request to the network management service provider entity, wherein the network data request is used to request the network management service provider entity to generate and report the network data, and the network data request comprises at least one of the following information: a generation periodicity and a storage policy; and
receiving, by the network management service consumer entity, the second network dataset from the network management service provider entity.

8. The method according to claim 7, wherein
the generation periodicity indicates a first time interval between two times of generating the network data by the network management service provider entity; and
the storage policy indicates to store, as the third network dataset within a first specified time period, network data generated based on the generation periodicity.

9. The method according to claim 7 or 8, wherein the network data request further comprises a first reporting policy, wherein
the first reporting policy comprises at least one of the following information: a first data obtaining periodicity and a first reporting periodicity;
the first data obtaining periodicity indicates a second time interval between two times of obtaining the network data in the second network dataset by the network management service provider entity when the second network dataset is generated, wherein the first data obtaining periodicity is greater than or equal to the generation periodicity; and
the first reporting periodicity indicates a time interval between reporting two second network datasets.

10. The method according to any one of claims 3 to 9, wherein when the network management service consumer entity checks that the first simulation network dataset is inaccurate, the method further comprises:
sending, by the network management service consumer entity, a historical data reporting indication to the network management service provider entity, wherein the historical data reporting indication indicates the network management service provider entity to report the third network dataset;
receiving, by the network management service consumer entity, first reporting information from the network management service provider entity, wherein the first reporting information comprises the third network dataset; and
optimizing, by the network management service consumer entity, the data generation model based on the third network dataset.

11. The method according to claim 10, wherein the method further comprises:
sending, by the network management service consumer entity, a reporting policy switching indication to the network management service provider entity, wherein the reporting policy switching indication indicates to switch to a second reporting policy, the second reporting policy comprises at least one of the following information: a second data obtaining periodicity and a second reporting periodicity, the second data obtaining periodicity is less than the first data obtaining periodicity, and the second reporting periodicity is less than the first reporting periodicity;
sending, by the network management service provider entity, second reporting information to the network management service consumer entity, wherein the second reporting information comprises a fourth network dataset reported according to the second reporting policy, the fourth network dataset comprises a part or all of the network data generated by the network management service provider entity based on the generation periodicity within a second time period, and a time interval between two times of obtaining the network data in the fourth network dataset is less than the first data obtaining periodicity; and
updating, by the network management service consumer entity, the network twin based on the fourth network dataset.

12. A network management method, wherein the method comprises:
receiving, by a network management service provider entity, a historical data reporting indication and a reporting policy switching indication from a network management service consumer entity, wherein the historical data reporting indication indicates to report a historical network dataset of a physical network, the reporting policy switching indication indicates to reduce a data obtaining periodicity and a reporting periodicity of the network dataset of the physical network, the historical network dataset is used to optimize a data generation model, the data generation model is used to generate a simulation network dataset, the simulation network dataset is used to create or update a network twin, and the network twin is a digital representation of the physical network for emulating the physical network; and
sending, by the network management service provider entity, the historical network dataset to the network management service consumer entity based on the historical data reporting indication, and sending a newly generated network dataset to the network management service consumer entity based on the reporting policy switching indication, wherein the newly generated network dataset is used to update the network twin during the optimization of the data generation model.

13. The method according to claim 12, wherein the method further comprises:
sending, by the network management service provider entity, a first network dataset to the network management service consumer entity, wherein the first network dataset is used to train the data generation model.

14. The method according to claim 12 or 13, wherein the method further comprises:
receiving, by the network management service provider entity, a network data request from the network management service consumer entity, wherein the network data request is used to request the network management service provider entity to generate and report network data, and the network data request comprises a generation periodicity and a storage policy;
sending, by the network management service provider entity, a second network dataset to the network management service consumer entity, to enable the network management service consumer entity to check accuracy of the simulation network dataset based on the second network dataset, wherein the second network dataset comprises network data collected from the physical network; and
storing, by the network management service provider entity according to the storage policy, the historical network dataset generated by the network management service provider entity based on the generation periodicity within a first specified time period.

15. The method according to claim 14, wherein
the generation periodicity indicates a first time interval between two times of generating the network data by the network management service provider entity; and
the storage policy indicates to store the historical network dataset generated based on the generation periodicity within the first specified time period.

16. The method according to claim 13 or 14, wherein the network data request further comprises a reporting policy, and the reporting policy comprises at least one of the following information: the data obtaining periodicity and the reporting periodicity;
the data obtaining periodicity indicates a second time interval between two times of obtaining the network data in the second network dataset by the network management service provider entity when the second network dataset is generated, wherein the data obtaining periodicity is greater than or equal to the generation periodicity; and
the reporting periodicity indicates a time interval between reporting two second network datasets.

17. A network management method, wherein the method comprises:
sending, by a network management service provider entity, a first network dataset to a network management service consumer entity;
generating, by the network management service consumer entity, a first simulation network dataset based on a data generation model, wherein the data generation model is obtained through training based on the first network dataset, and the first network dataset comprises network data collected from a physical network; and
creating or updating, by the network management service consumer entity, a network twin based on the first simulation network dataset, wherein the network twin is a digital representation of the physical network for emulating the physical network.

18. The method according to claim 17, wherein the method further comprises:
indicating, by the network management service consumer entity, the network management service provider entity to send the network data of the physical network to the network management service consumer entity; and
sending, by the network management service provider entity, the network data of the physical network to the network management service consumer entity.

19. The method according to claim 17 or 18, wherein the method further comprises:
validating, by the network management service consumer entity, accuracy of the first simulation network dataset based on a second network dataset, and updating the data generation model, wherein the second network dataset comprises network data collected from the physical network.

20. The method according to claim 19, wherein the validating, by the network management service consumer entity, accuracy of the first simulation network dataset based on a second network dataset comprises:
determining, by the network management service consumer entity based on differential information between the first simulation network dataset and the second network dataset, whether the first simulation network dataset is accurate.

21. The method according to claim 19 or 20, wherein the updating the data generation model comprises:
updating, by the network management service consumer entity, the data generation model by using a third network dataset, wherein the third network dataset comprises network data collected from the physical network.

22. The method according to claim 21, wherein the indicating, by the network management service consumer entity, the network management service provider entity to send the network data of the physical network to the network management service consumer entity comprises:
sending, by the network management service consumer entity, a network data request to the network management service provider entity, wherein the network data request is used to request the network management service provider entity to generate and report the network data, and the network data request comprises at least one of the following information: a generation periodicity and a storage policy;
sending, by the network management service provider entity, the second network dataset to the network management service consumer entity; and
storing, as the third network dataset by the network management service provider entity according to the storage policy, network data generated by the network management service provider entity based on the generation periodicity within a first specified time period.

23. The method according to claim 22, wherein
the generation periodicity indicates a first time interval between two times of generating the network data by the network management service provider entity; and
the storage policy indicates to store, as the third network dataset within the first specified time period, the network data generated based on the generation periodicity.

24. The method according to claim 22 or 23, wherein the network data request further comprises a first reporting policy, wherein
the first reporting policy comprises at least one of the following information: a first data obtaining periodicity and a first reporting periodicity;
the first data obtaining periodicity indicates a second time interval between two times of obtaining the network data in the second network dataset by the network management service provider entity when the second network dataset is generated, wherein the first data obtaining periodicity is greater than or equal to the generation periodicity; and
the first reporting periodicity indicates a time interval between reporting two second network datasets.

25. The method according to any one of claims 19 to 24, wherein when the network management service consumer entity checks that the first simulation network dataset is inaccurate, the method further comprises:
sending, by the network management service consumer entity, a historical data reporting indication to the network management service provider entity, wherein the historical data reporting indication indicates the network management service provider entity to report the third network dataset;
sending, by the network management service provider entity, first reporting information to the network management service consumer entity, wherein the first reporting information comprises the third network dataset; and
optimizing, by the network management service consumer entity, the data generation model based on the third network dataset.

26. The method according to claim 25, wherein the method further comprises:
sending, by the network management service consumer entity, a reporting policy switching indication to the network management service provider entity, wherein the reporting policy switching indication indicates to switch to a second reporting policy, the second reporting policy comprises at least one of the following information: a second data obtaining periodicity and a second reporting periodicity, the second data obtaining periodicity is less than the first data obtaining periodicity, and the second reporting periodicity is less than the first reporting periodicity;
sending, by the network management service provider entity, second reporting information to the network management service consumer entity, wherein the second reporting information comprises a fourth network dataset reported according to the second reporting policy, the fourth network dataset comprises a part or all of the network data generated by the network management service provider entity based on the generation periodicity within a second time period, and a time interval between two times of obtaining the network data in the fourth network dataset is less than the first data obtaining periodicity; and
updating, by the network management service consumer entity, the network twin based on the fourth network dataset.

27. A network management apparatus, wherein the apparatus comprises a module configured to implement the method according to any one of claims 1 to 11, or comprises a module configured to implement the method according to any one of claims 12 to 16.

28. A network management apparatus, comprising a processor, a memory, and instructions that are stored in the memory and that are run on the processor, wherein when the instructions are run, the network management apparatus is enabled to perform the method according to any one of claims 1 to **11,** or perform the method according to any one of claims 12 to 16.

29. A network management system, comprising a first network management apparatus and a second network management apparatus, wherein the first network management apparatus comprises a module configured to perform the method according to any one of claims 1 to 11, and the second network management apparatus comprises a module configured to implement the method according to any one of claims 12 to 16.

30. A computer-readable storage medium, wherein the computer-readable storage medium comprises instructions, and when the instructions are run by a processor, the method according to any one of claims 1 to 26 is implemented.
